# EUROPÄISCHE PATENTANMELDUNG

(11) **EP 2 236 532 A1**
(43) Veröffentlichungstag der Anmeldung: **06.10.2010**
(21) Anmeldenummer: 09004630.1
(22) Anmeldetag: 31.03.2009
(51) Int. Cl.: C08G 18/10, C08G 18/28, C08G 18/72

(54) **Nanopartikelmodifizierte hydrophile Polyisocyanate**

(71) Anmelder: Bayer MaterialScience AG, 51368 Leverkusen (DE)
(72) Erfinder: Nennemann, Arno, Dr., 51469 Bergisch Gladbach (DE); Pyrlik, Oliver, Dr., 51379 Leverkusen (DE); Laas, Hans-Josef, Dr., 51519 Odenthal (DE)

(57) **Zusammenfassung**

Die vorliegende Erfindung betrifft neuartige mittels Nanopartikeln modifizierte hydrophile Polyisocyanate, ein Verfahren zu ihrer Herstellung und ihre Verwendung als Ausgangskomponente bei der Herstellung von Polyurethan-Kunststoffen, insbesondere als Vernetzer für wasserlösliche oder -dispergierbare Lackbindemittel oder -bindomittelkomponenten mit gegenüber Isocyanatgruppen reaktionsfähigen Gruppen, sowie deren Verwendung in Beschichtungsmitteln und Klebstoffen.

## Beschreibung

Die vorliegende Erfindung betrifft neuartige mittels Nanopartikeln modifizierte hydrophile Polyisocyanate, ein Verfahren zu ihrer Herstellung und ihre Verwendung als Ausgangskomponente bei der Herstellung von Polyurethan-Kunststoffen, insbesondere als Vernetzer für wasserlösliche oder -dispergierbare Lackbindemittel oder -bindemittelkomponenten mit gegenüber Isocyanatgruppen reaktionsfähigen Gruppen, sowie deren Verwendung in Beschichtungsmitteln und Klebstoffen.

Vor dem Hintergrund einer zunehmend strengeren Umweltgesetzgebung gewannen in den letzten Jahren wasserdispergierbare Polyisocyanate für verschiedene Anwendungsgebiete an Bedeutung. Sie finden heute insbesondere als Vernetzerkomponenten für qualitativ hochwertige wasscrverdünnbare Zweikomponenten-Polyurethan-Lacke (2K-PUR-Lacke) oder als Zusatzmittel für wässrige Dispersionsklebstoffe Verwendung, dienen zur Vernetzung wässriger Dispersionen in der Textilausrüstung oder formaldehydfreier Textildruckfarben und eignen sich darüber hinaus beispielsweise auch als Hilfsmittel zur Naßverfestigung von Papier (vgl. z. B. EP-A 0 959 087 und hierin zitierte Literatur).

Zur Herstellung wasserdispergierbarer Polyisocyanate sind eine Vielzahl unterschiedlicher Verfahren bekannt, beispielsweise die Umsetzung hydrophober Polyisocyanate mit hydrophilen Polyetheralkoholen (siehe z. B. EP-B 0 206 059, EP-B 0 540 985 und EP-B 0 959 087), die Abmischung und/oder Umsetzung mit speziellen hydrophilen Polyetherurethancn (siehe z. B. EP-B 0 486 881 und WO 2005/047357), die Umsetzung mit ionischen Gruppen aufweisenden Verbindungen (siehe z. B. WO 01/88006) oder einfaches Abmischen hydrophober Polyisocyanate mit geeigneten gegenüber Isocyanatgruppen inerten Emulgatoren (siehe z. B. WO 97/31960).

Aus. DE 10 2006 054289 und EP 07021690.2 sind kolloidal stabile, transparente bzw. transluzente nanopartikelhaltige Polyisocyanate bekannt, welche durch Modifizierung von Polyisocyanaten mit Aminoalkoxysilanen bzw. Aminoalkoxysilanen und Polydimethylsiloxanen und Zugabe von Nanopartikeln erhalten werden. Nicht beschrieben sind jedoch hydrophile Polyisocyanate für den Einsatz in wässrigen Dispersionen. Für den Einsatz in wässrigen Dispersionen sind hydrophile Polyisocyanate jedoch vorteilhaft um eine gute Einarbeitbarkeit sowie Homogenität der Beschichtung zu gewährleisten.

Aufgabe der vorliegenden Erfindung war es daher, hydrophile Polyisocyanate bereitzustellen, in denen nanoskalige anorganische Partikel eindispergiert sind. Die so modifizierten Polyisocyanate sollten sich bei möglichst gerimgem Lösemittelgehalt durch Viskositäts- und Agglomerationsstabilität bei Lagerung auszeichnen und sich leicht in wässrige Dispersionen einarbeiten lassen. Vorteilhaft war es hierbei, geringe Lösemittelgehalte zu erreichen. Ferner war es das Ziel, dass sich aus diesen Polyisocyanaten trübungsfreie Beschichtungen in wässrigen Applikationen mit vorteilhaften Eigenschaften durch Polyol- oder Polyaminvemetzung herstellen lassen.

Überraschend wurde nun gefunden, daß eine partielle Umsetzung von Isocyanatgruppen in oligomeren, hydrophilen Polyisocyanaten mit Alkoxysilanen zu stabilen Dispersionen anorganischer Nanopartikel in unterschiedlichen derart modifizierter Polyisocyanaten führt wobei auch Feststoffgehalte von 100 % erreicht werden können und diese sich in wässrigen Applikationen mit vorteilhaften Eigenschaften einsetzen lassen. So führen die erfindungsgemäßen Polyisocyanate zu verbesserten Korrosionsschutzeigenschaften und besserer Performance im Salzsprühtest. Ferner zeigen sie einen geringeren relativen Viskositätsanstieg als im Vergleich zu hydrophoben nanopartikelmodifizierten Polyisocyanaten.

Gegenstand der vorliegenden Erfindung ist daher ein Verfahren zur Herstellung nanopartikelmodifizierter Polyisocyanate, bei dem
A) Hydrophile Polyisocyanate enthaltend mindestens einen ionischen und/oder nichtionischen Emulgator mit
   Polyethereinheiten der Formel (11) 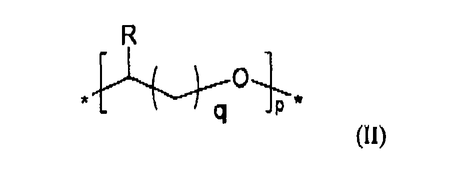 in welcher
   - R: Wasserstoff oder ein C1- bis C10-Alkylrest und
   - p: eine Zahl zwischen 1 bis 1000, und
   - q: 1 bis 3 ist
   und/oder Sulfonatgruppen (als SO₃)
   und/oder Phosphat- oder Phosphonatgruppen (als PO₄ bzw. PO₃)
   mit
B) Alkoxysilanen der Formel (I) 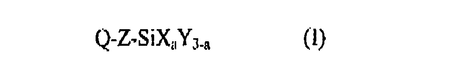 in welcher
   - Q: eine gegenüber Isocyanaten reaktive Gruppe,
   - X: eine hydrolysierbare Gruppe,
   - Y: gleiche oder verschiedene Alkylgruppen
   - Z: eine C₁-C₁₂-Alkylengruppe und
   - a: eine ganze Zahl von 1 bis 3 ist,
   umgesetzt werden, und anschließend
C) anorganische Partikel, gegebenenfalls in oberflächenmodifizicrter Form, mit einer mittels dynamischer Lichtstreuung in Dispersion bestimmten mittleren Partikelgröße (Z-Mittelwert) von kleiner als 200 nm eindispergiert werden.

Gegenstand der Erfindung sind weiterhin die so erhältlichen Polyisocyanate bzw. Polyisocyanatgemische sowie deren Verwendung als Ausgangskomponente bei der Herstellung von Polyurethankunststoffen, insbesondere als Vernetzerkomponente für wasserlösliche oder -dispergierbare Lackbindemittel oder Lackbindemittelkomponenten.

Geeignete hydrophile Polyisocyanate A) zur Herstellung der erfindungsgemäßen nanopartikelmodifizierten Polyisocyanate umfassen Ausgangspolyisocyanate A1) sowie mindestens einen ionischen und/oder nichtionischen Emulgator D).

Geeignete Ausgangspolyisocyanate A1) zur Herstellung der hydrophilen Polyisocyanate A sind Polyisocyanate mit aliphatisch, cycloaliphatisch, aromatisch und/oder araliphatisch gebundenen Isocyanatgruppen. Bei diesen Polyisocyanaten handelt es sich um monomerenarme, durch Modifizierung der entsprechender Diisocyanate erhältliche Polyisocyanate mit Uretdion-, Isocyanurat-, Allophanat-, Biuret-, Iminooxadiazindion- und/oder Oxadiazintrionstruktur wie sie beispielsweise in J. Prakt. Chem. 336 (1994) 185 - 200 und EP-A 0 798 299 beispielhaft beschrieben sind oder beliebige Gemische solcher Polyisocyanate. "Monomerenarm" meint in diesem Zusammenhang einen Restgehalt an monomeren Ausgangsisocyanaten von weniger als 1 Gew-%.

Bevorzugt handelt es sich bei den Ausgangspolyisocyanaten A1) um die genannten Polyisocyanate mit ausschließlich aliphatisch und/oder cycloaliphatisch gebundenen Isocyanatgruppen, ganz besonders bevorzugt um Polyisocyanate mit Isocyanuratstruktur auf Basis von HDI, IPDI und/oder 4,4'-Diisocyanatodicyclohexylmethan.

Zur Herstellung der Ausgangspolyisocyanate A1) werden beispielsweise beliebige durch Phosgenierung oder nach phosgenfreien Verfahren, wie z. B. durch thermische Urethanspaltung, zugängliche monomere Diisocyanate und Triisocyanate eingesetzt. Bevorzugte Diisocyanate sind solche des Molekulargewichtsbereichs 140 bis 400 mit aliphatisch, cycloaliphatisch, araliphatisch und/oder aromatisch gebundenen Isocyanatgruppen, wie z. B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw, 2,4,4-Trimethyl-1,6-diisocyanatohexan, 1,10-Diisocyanatodecan, 1,3- und 1,4-Diisocyanatocclohexan, 2,4- und 2,6-Diisocyanato-1-methylcyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 2,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis-(2-isocyanato-prop-2-yl)-benzol (TMXDI), 2,4- und 2,6-Diisoeyanatotoluol (TDI), 2,4'- und 4,4'-Diisocyanatodiphenylmethan (MDI), 1,5-Diisocyanatonaphthalin oder beliebige Gemische solcher Diisocyanate.

Bevorzugt handelt es sich bei den Ausgangspolyisocyanaten A1) um Polyisocyanate der genannten Art mit ausschließlich aliphatisch und/oder cycloaliphatisch gebundenen Isocyanatgruppen, die eine mittlere NCO-Funktionalität von 2,0 bis 5,0, vorzugsweise von 2,3 bis 4,5, einen Gehalt an Isocyanatgruppen von 8,0 bis 27,0 Gew.-%, vorzugsweise 14,0 bis 24,0 Gew.-% und einen Gehalt an monomeren Diisocyanaten von weniger als 1 Gew.-%, vorzugsweise weniger als 0,5 Gew.-% aufweisen.

Geeignete hydrophile Polyisocyanate A) zur Herstellung der erfindungsgemäßen nanopartikelmodifizierten Polyisocyanate enthalten neben den Ausgangspolyisocyanaten A1) mindestens einen ionischen und/oder nichtionischen Emulgator D).

Hierbei handelt es sich um beliebige grenzflächenaktive Stoffe, die aufgrund ihrer Molekülstruktur in der Lage sind, Polyisocyanate bzw. Polyisocyanatgemische in wäßrigen Emulsionen über einen längeren Zeitraum zu stabilisieren.

Eine Art nichtionischer Emulgatoren D) stellen beispielsweise Umsetzungsprodukte D1) der Polyisocyanate A1) mit hydrophilen Polyetheralkoholen dar.

Geeignete hydrophile Polyetheralkohole sind ein- oder mehrwertige, im statistischen Mittel 5 bis 50 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z. B. Ullmanns Encyclopädie der technischen Chemie, 4. Auflage, Band 19, Verlag Chemie, Weinheim S. 31 - 38). Solche Startermoleküle können beispielsweise beliebige ein- oder mehrwertige Alkohole des Molekulargewichtsbereiches 32 bis 300 sein, wie z. B. Methanol, Ethanol, n-Propanol, Isopropanol, n-Butanol, Isobutanol, sec-Butanol, die isomeren Pentanole, Hexanole, Octanole und Nonanole, n-Decanoi, n-Dodecanol, n-Tetradecanol, n-Hexadecanol, n-Octadecanol, Cyclohexanol, die isomeren Methylcyclohexanole, Hydroxymethylcyclohexan, 3-Methyl-3-hydroxymethyloxetan, Benzylalkohol, Phenol, die isomeren Kresole, Octylphenole, Nonylphenole und Naphthole, Furfurylalkohol, Tetrahydrofurfurylalkohol, 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können. Geeignete Polyetheralkohole sind entweder reine Polyethylenoxidpolyotheralkohole oder gemischte Polyalkylenoxidpolyether, deren Alkylenoxideinheiten zu mindestens 70 mol-%, vorzugsweise zu mindestens 80 mol-% aus Ethylenoxideinheiten bestehen.

Bevorzugte Polyalkylenoxidpolyetheralkohole sind solche, die unter Verwendung der oben genannten Monoalkohole des Molekulargewichtsbereiches 32 bis 150 als Startermoleküle hergestellt wurden. Besonders bevorzugte Polyetheralkohole sind reine Polyethylenglycolmonomethyletheralkohole, die im statistischen Mittel 5 bis 50, ganz besonders bevorzugt 5 bis 25 Ethylenoxideinheiten aufweisen.

Die Herstellung solcher nichtionischer Emulgatoren D1) ist prinzipiell bekannt und beispielsweise in EP-B 0 206 059 und EP-B 0 540 985 beschrieben.

Die Herstellung kann durch Umsetzung der Polyisocyanatkomponenten A1) mit den genannten Palyetheralkoholen entweder in einem separaten Reaktionsschritt mit anschließendem Vermischen mit den in eine hydrophile Form zu überführenden Polyisocyanatkomponenten A1) oder aber in der Weise erfolgen, dass man die Polyisocyanatkomponenten A1) mit einer entsprechenden Menge der Polyetheralkohole abmischt, wobei sich spontan ein erfindungsgemäßes hydrophiles Polyisocyanatgemisch bildet, das neben nicht umgesetztem Polyisocyanat A1) den sich in situ aus dem Polyetheralkohol und einem Teil der Komponente A1) bildenden Emulgator D1) enthält.

Die Herstellung dieser Art nichtionischer Emulgatoren D1) erfolgt im allgemeinen bei Temperaturen von 40 bis 180 °C, vorzugsweise 50 bis 150 °C, unter Einhaltung eines NCO-/OH-Äquivalent-Verhältnisses von 2:1 bis 400:1, vorzugsweise von 4:1 bis 140:1.

Bei der erstgenannten Variante der separaten Herstellung der nichtionischen Emulgatoren D1) werden diese vorzugsweise unter Einhaltung eines NCO/OH-Äquivalentverhältnisses von 2 : 1 bis 6 : 1 hergestellt. Bei der in situ-Herstellung der Emulgatoren D1) kann selbstverständlich ein hoher Übcrschuss an Isocyanatgruppen innerhalb des oben genannten breiten Bereichs zur Anwendung gelangen.

Die Reaktion der Polyisocyanatkomonente A1) mit den genannten hydrophilen Polyetheralkoholen zu nichtionischen Emulgatoren D1) kann nach dem in EP-B 0 959 087 beschriebenen Verfahren auch so geführt werden, dass die durch NCO/OH-Reaktion primär gebildeten Urethangruppen zumindest anteilig, vorzugsweise zu mindestens 60 mol-%, zu Allophanatgruppen weiter umgesetzt werden. In diesem Fall werden Reaktionspartner im oben genannten NCO/OH-Äquivalentverhältnis bei Temperaturen von 40 bis 180 °C, vorzugsweise 50 bis 150 °C, in der Regel in Gegenwart der in den zitierten Patentschriften angeführten, zur Beschleunigung der Allophanatisierungsreaktion geeigneten Katalysatoren zur Reaktion gebracht.

Ein weiterer Typ geeigneter nichtionischer Emulgatoren D) stellen beispielsweise auch Umsetzungprodukte von monomeren Diisocyanaten oder Diisocyanatgemischen mit den oben genannten ein- oder mehrwertigen hydrophilen Polyetheralkoholen, insbesondere mit reinen Polyethylenglycolmonomethyletheralkoholen, die im statistischen Mittel 5 bis 50, bevorzugt 5 bis 25 Ethylenoxideinheiten aufweisen, dar. Die Herstellung solcher Emulgatoren D2) ist ebenfalls bekannt und beispielsweise in EP-B 0 486 881 beschrieben.

Gegebenenfalls können die Polyetherurethan-Emulgatoren D2) aber auch im Anschluss an das Abmischen der Komponenten in den vorstehend beschriebenen Mengenverhältnissen in Gegenwart geeigneter Katalysatoren mit den Polyisocyanaten A1) unter Allophanatisierung umgesetzt werden. Dabei entstehen ebenfalls erfindungsgemäße hydrophile Polyisocyanatgemische, die neben nicht umgesetztem Polyisocyanat A1) einen sich in situ aus dem Emulgator D2) und einem Teil der Komponente A1) bildenden weiteren nichtionischen Emulgatortyp D3) mit Allophanatstruktur enthalten. Auch die in situ-Herstellung solcher Emulgatoren D3) ist bereits bekannt und beispielsweise in WO 2005/047357 beschrieben.

Die erfindungsgemäßen nanopartikelmodifizierten hydrophilen Polyisocyanatgemische können anstelle der beispielhaft beschriebenen nichtionischen Emulgatoren auch Emulgatoren mit ionischen, insbesondere anionischen Gruppen enthalten.

Solche ionischen Emulgatoren D stellen sulfonatgruppenhaltige Emulgatoren D4) dar, wie sie beispielsweise nach dem Verfahren der WO 01/88006 durch Umsetzung der Polyisocyanate A1) mit 2-(Cyclohexylamino)-ethansulfonsäure und/oder 3-(Cyclohexylamino)amino)-propansulfonsäure erhältlich sind. Diese Umsetzung findet in der Regel bei Temperaturen von 40 bis 150 °C, vorzugsweise 50 bis 130 °C, unter Einhaltung eines Äquivalent-Verhältnisses von NCO-Gruppen zu Aminogruppen von 2:1 bis 400:1, vorzugsweise von 4:1 bis 250:1, statt, wobei zur Neutralisation der Sulfonsäuregruppen tertiäre Amine mitverwendet werden. Geeignete Neutralisationsamine sind beispielsweise tertiäre Monoamine, wie z. B. Trimethylamin, Triethylamin, Tripropylamin, Tributylamin, Dimethylcyclohexylamin, Diisopropylcthylamin, N-Methylmorpholin, N-Ethylmorpholin, N-Methylpiperidin, oder N-Ethylpiperidin, tertiäre Diamine, wie z. B. 1,3-Bis-(dimethylamino)-propan, 1,4-Bis-(dimethylamino)-butan oder N,N'-Dimethylpiperazin, oder, allerdings weniger bevorzugt, Alkanolamine, wie z. B. Dimethylethanolamin, Methyldiethanolamin oder Triethanolamin. Wie bereits für die nichtionischen Emulgatoren D1) beschrieben, kann auch die Herstellung dieser ionischen Emulgatoren D4) entweder in einem separaten Reaktionsschritt mit anschließendem Vermischen mit den in eine hydrophile Form zu überführenden Polyisocyanatkomponenten A1) oder aber in situ in diesen Polyisocyanatkomponenten erfolgen, wobei sich direkt ein erfindungsgemäßes hydrophiles Polyisocyanatgemisch bildet, das neben nicht umgesetztem Polyisocyanat A1) den sich in situ aus den Aminosulfonsäuren, dem Neutralisationsamin und einem Teil der Komponenten A1) bildenden Emulgator D4) enthält.

Ein weiterer Typ geeigneter Emulgatoren D) sind solche, die in einem Molekül gleichzeitig ionische und nichtionische Strukturen enthalten. Bei diesen Emulgatoren D5) handelt es sich z. B. um mit tertiären Aminen, wie z. B. den oben genannten Neutralisationsaminen neutralisierte Alkylphenolpolyglyklether-phosphate und -phosphonate oder Fettalkoholpolyglykolether-phosphate und -phosphonate, wie sie beispielsweise in WO 97/31960 zur Hydrophilierung von Polyisocyanaten beschrieben sind, oder auch um mit solchen tertiären Aminen neutralisierte Alkylphenolpolyglykolether-sulfate oder Fettalkoholpolyglykolether-sulfate.

Unabhängig von der Art des Emulgators D) und dessen Herstellung wird dessen Menge bzw. die Menge der bei einer in situ-Herstellung des Emulgators den Polyisocyanaten A1) zugesetzten ionischen und/oder nichtionischen Komponenten im allgemeinen so bemessen, dass die letztlich erhaltenen erfindungsgemäßen hydrophilen Polyisocyanatgemische eine die Dispergierbarkeit des Polyisocyanatgemisches gewährleistenden Menge, vorzugsweise 1 bis 50 Gew.-%, besonders bevorzugt 2 bis 30 Gew.-%, bezogen auf die Gesamtmenge der Komponenten A1) und D enthalten,

In einer bevorzugten Ausführungsform werden als hydrophil modifizierte Polyisocyanate A) solche auf Basis aromatischer, araliphatischer, cycloaliphatischer und/oder aliphatischer Polyisocyanate eingesetzt, die einen NCO-Gehalt von 5 bis 25 Gew.-%, und eine NCO-Funktionalität ≥ 2, aufweisen und dabei mindestens eine Polyethereinheit der Formel (II) 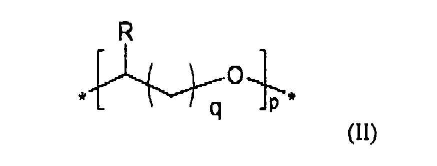 in welcher
- R: für Wasserstoff oder einen Cl- bis C10-Alkylrest, vorzugsweise Wasserstoff oder einen Methylrest und
- p: für eine ganze Zahl zwischen 1 bis 1000, vorzugsweise von 1 bis 300 und
- q: für eine ganze Zahl von 1 bis 3 steht
und/oder Sulfonatgruppen (als SO₃), und/oder Phosphat- bzw. Phosphonatgruppen (als PO₄ bzw. PO₃)

enthalten.

Bevorzugt ist R - Wasserstoff oder eine Methylgruppe und p gleich 1 bis 300.

Bevorzugt sind die Polyethereinheiten der Formel (II) über Urethangruppen an das Polyisocyanat-Gerüst gebunden.

Die Umsetzung der Ausgangspolyisocyanate A1) mit den ionischen oder nichtionischen Emulgatoren D) kann lösemittelfrei oder gegebenenfalls in einem geeigneten, gegenüber Isocyanatgruppen inerten Lösemittel erfolgen. Geeignete Lösemittel sind beispielsweise die an sich bekannten üblichen Lacklösemittel, wie z. B. Ethylacetat, Butylacetat, Ethylenglykolmonomethyl- oder - ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso®, Isopar®, Nappar® (Deutsche EXXON CHEMICAL GmbH, Köln, DE) und Shellsol® (Deutsche Shell Chemie GmbH, Eschborn, DE) im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethylether, Diethylenglykolethyl- und-butyletheracetat, N-Methylpyrrolidon und N-Methylcaprolactam, oder beliebige Gemische solcher Lösemittel.

Zur Reaktionsbeschleunigung können bei der Herstellung der Polyisocyanate A) gegebenenfalls aber auch die üblichen aus der Polyurethanchemie bekannten Katalysatoren mitverwendet werden, beispielsweise tert. Amine wie Triethylamin, Pyridin, Methylpyridin, Benzyldimethylamin, N,N-Endoethylenpiperazin, N-Methylpiperidin, Pentamethyldiethylentiamin, N,N-Dimethyl-aminocyclohexan, N,N'-Dimethylpiperazin oder Metallsalze wie Eisen(III)-chlorid, Aluminium-tri(ethylacetoacetat), Zinkchlorid, Zink(II)-n-octanoat, Zink(II)-2-ethyl-1-hexanoat, Zink(II)-2-ethylcaproat, Zink(II)-stearat, Zink(II)-naphthenat, Zink(II)-acetylacetonat, Zinn(II)-n-octanoat, Zinn(II)-2-ethyl-1-hexanoat, Zinn(II)-ethylcaproat, Zinn(II)-laurat, Zinn(II)-palmitat, Dibutyl-zinn(IV)-oxid, Dibutylzinn(IV)-dichlorid, Dibutylzinn(IV)-diacetat, Dibutylzinn(IV)-dimaleat, Dibutylzinn(IV)-dilaurat, Dioctylzinn(IV)-diacetat, Zirconium-(IV)-2-ethyl-1-hexanoat, Zirconium-(IV)-neodecanoat, Zirconium-(IV)-naphthenat, Zirconium-(IV)-acetylacetonat, Wismut-2-ethyl-1-hexanoat, Wismut-octoat, Molybdänglykolat oder beliebige Gemische solcher Katalysatoren.

Geeignete Ausgangskomponenten B) zur Durchführung des erfindungsgemäßen Verfahrens sind beliebige Alkoxysilane der Formel (I) 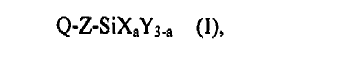 in welcher Q, Z, X, Y und a die obengenannte Bedeutung haben.

Bevorzugte Alkoxysilane sind solche der Formel (I), bei denen die Gruppe X eine Alkoxy- oder Hydroxygruppe, besonders bevorzugt Methoxy, Ethoxy, Propoxy oder Butoxy bedeutet.

Bevorzugt steht Y in Formel (I) für eine lineare oder verzweigte C₁-C₄-Alkylgruppe, bevorzugt Methyl oder Ethyl.

Z ist in Formel (I) bevorzugt eine lineare oder verzweigte C₁-C₄-Alkylengruppe.

Bevorzugt steht a in Formel (I) für 1 oder 2.

Bevorzugt ist in Formel (I) die Gruppe Q eine gegenüber Isocyanaten unter Urethan-, Harnstoff-oder Thioharnstoffbildung reagierende Gruppe. Dies sind bevorzugt OH-, SH- oder primäre oder sekundäre Aminogruppen.

Bevorzugte Aminogruppen entsprechen der Formel -NHR¹, wobei R¹ Wasserstoff, eine C₁-C₁₂-Alkylgruppe oder eine C₆-C₂₀-Arylgruppe oder ein Asparaginsäureester-Rest der Formel R²OOC-CH₂-CH(COOR³)-, wobei R², R³ bevorzugt gleiche oder verschiedene Alkylreste sind, die gegebenenfalls auch verzweigt sein können, mit 1 bis 22 Kohlenstoffatomen, bevorzugt 1 bis 4 Kohlenstoffatomen. Besonders bevorzugt sind R², R³ jeweils Methyl- oder Ethylreste.

Solche alkoxysilanfunktionellen Asparaginsäureester sind, wie in US 5364955 beschrieben, in an sich bekannter Weise durch Addition von aminofunktionellen Alkoxysilanen an Malein oder Fumarsäureester erhältlich.

Aminofunktionelle Alkoxysilane, wie sie als Verbindungen der Formel (I) oder zur Herstellung der alkoxysilylfunktionellen Asparaginsäureester eingesetzt werden können, sind beispielsweise 2-Aminoethyldimethylmethoxysilan, 3-Aminopropyltrimethoxysilan, 3-Aminopropyltriethoxysilan, 3-Aminopropylmethyldimethoxysilan, Aminopropylmethyldiethoxysilan.

Ferner können als Aminoalkoxxysilane mit sekundären Aminogruppen der Formel (I) in B) auch N-Methyl-3-aminopropyltrimethoxysilan, N-Methyl-3-aminopropyltriethoxysilan, N-Phenyl-3-aminopropyltrimethoxysilan, Bis-(gamma-trimethoxysilylpropyl)amin, N-Butyl-3-aminopropyltrimethoxysilan, N-Butyl-3-aminopropyltriethoxysilan, N-Ethyl-3-aminoisobutyltrimethoxysilan, N-Ethyl-3-aminoisobutyltriethoxysilan oder N-Ethyl-3-aminoisobutylmethyldimethoxysilan, N-Ethyl-3-aminoisobutylmethyldiethoxysilan sowie die analogen C₂-C₄-Alkoxysilane.

Geeignete Malein- oder Fumarsäureester zur Herstellung der Asparaginsäureester sind Maleinsäuredicmethylester, Maleinsäurediethylester, Maleinsäuredi-n-butylester sowie die entsprechenden Fumarester. Maleinsäuredimethylester und Maleinsäurediethylester sind besonders bevorzugt.

Bevorzugtes Aminosilan zur Herstellung der Asparaginsäureester ist 3-Aminopropyltrimethoxysilan oder 3-Aminopropyltriethoxysilan.

Die Umsetzung der Malein- bzw. Fumarsäureester mit den Aminoalkylalkoxysilanen erfolgt innerhalb eines Temperaturbereichs von 0 bis 100 ° C, wobei die Mengenverhältnisse in der Regel so gewählt werden, daß die Ausgangsverbindungen im molaren Verhältnis 1:1 eingesetzt werden. Die Umsetzung kann in Substanz oder auch in Gegenwart von Lösungsmitteln wie z.B. Dioxan durchgeführt werden. Die Mitverwendung von Lösungsmitteln ist jedoch weniger bevorzugt. Selbstverständlich können auch Mischungen verschiedener 3-Aminoalkylalkoxysilane mit Mischungen von Fumar- und/oder Maleinsäureestern umgesetzt werden.

Bevorzugte Alkoxysilane zur Modifizierung der Polyisocyanate sind sekundäre Aminosilane, der vorstchend beschriebenen Art, besonders bevorzugt Asparaginsäureester der vorstehend beschriebenen Art sowie Di- bzw. Monoalkoxysilane.

Die vorstehend genannten Alkoxysilane können einzeln aber auch in Mischungen zur Modifizierung eingesetzt werden.

Bei der Modifizierung beträgt das Verhältnis von freien NCO-Gruppen des zu modifizierenden Isocyanats zu den NCO-reaktiven Gruppen Q des Alkoxysilans der Formel (1) bevorzugt 1 : 0,01 bis 1 : 0,75, besonders bevorzugt 1 : 0,01 bis 1 : 0,4, ganz besonders bevorzugt 1 : 0,02 bis 1 : 0,2.

Prinzipiell ist es natürlich auch möglich, höhere Anteile an NCO-Gruppen mit den vorgenannten Alkoxysilanen zu modifizieren, jedoch ist darauf zu achten, dass die Anzahl der zur Vernetzung zur Verfügung stehenden freien NCO-Gruppen für eine zufrieden stellende Vernetzung noch ausreichend ist.

Die Reaktion von Aminosilan und Polyisocyanat erfolgt bei 0 - 100 °C, bevorzugt bei 0 - 50 °C, besonders bevorzugt bei 15 - 40 °C. Gegebenenfalls kann eine exotherme Reaktion durch Kühlung kontrolliert werden.

Selbstverständlich können die freien NCO-Gruppen im Anschluss an die Silanmodifizierung der so modifizierten Polyisocyanate noch weitergehend modifiziert werden. Dies kann beispielsweise eine partielle oder vollständige Blockierung der freien NCO-Gruppen mit dem Fachmann an sich bekannten Blockierungsmitteln der Polyurethanchemie sein (zur Blockierung von Isocyanatgruppen siche DE-A 10226927, EP-A 0 576 952, EP-A 0 566 953, EP-A 0 159 117, US-A 4 482 721, WO 97/12924 oder EP-A 0 744 423). Geeignete Blockierungsmittel sind beispielsweise Malonsäurediethylester, Acetessigester, Acetonoxim, Butanonoxim, Methyl-ethyl-ketoxim, ε-Caprolactam, sekundäre Amine sowie Triazol- und Pyrazolderivate wie bspw. 3,5-Dimethylpyrazol, 1,2,4-Triazol, Dimethyl-1,2,4-triazol, Imidazol, Diisopropylamin, Dicyclohexylamin, N-tert.-butyl-benzylamin Cyclopentanon-2-carboxymethylester, Cyclopentanon-2-carboxyethylester oder beliebige Gemische dieser Blockierungsmittel. Entsprechend blockierte hydrophile Polyisocyanatgemische können in Kombination mit den oben genannten wässrigen Lackbindemitteln oder Lackbindemittelkomponenten im Sinne von wässrigen Einkomponenten-PUR-Einbrennsystemen eingesetzt werden.

Im erfindungsgemäßen Verfahren können prinzipiell zu jedem Zeitpunkt die dem Fachmann an sich bekannten gegenüber NCO-Gruppen inerten Lösemittel zugesetzt werden. Beispielsweise sind dies Lösungsmittel wie Butylacetat, Methylethylketon, 1-Methoxy-2-propylacetat, Ethylacetat, Toluol, Xylol, Solvent Naphta sowie deren Mischungen.

Während oder im Anschluss an die Modifizierung des Polyisocyanats werden die gegebenenfalls oberflächenmodifizierten Nanopartikel eingebracht. Dies kann durch einfaches Einrühren der Partikel erfolgen. Denkbar sind jedoch auch der Einsatz erhöhter Dispergierenergie, wie beispielsweise durch Ultraschall, Strahldispergierung oder Hochgeschwindigkeitsrührer nach dem Rotor-Stator-Prinzip erfolgen kann. Bevorzugt ist einfaches mechanisches Einrühren.

Die Partikel können prinzipiell sowohl in Pulverform als auch in Form von Suspensionen oder Dispersionen in geeigneten, vorzugsweise gegenüber Isocyanaten inerten Lösungsmitteln eingesetzt werden. Bevorzugt ist der Einsatz der Partikel in Form von Dispersionen in organischen Lösungsmitteln, wobei die Lösungsmittel bevorzugt inert gegenüber Isocyanaten sein sollen.

Für die Organosole geeignete Lösemittel sind Methanol, Ethanol, i-Propanol, Aceton, 2-Butanon, Mcthyl-isobutylketon, sowie die an sich in der Polyurethanchemie gängigen Lösemittel wie Butylacetat, Ethylacetat, 1-Methoxy-2-propylacetat, Toluol, 2-Butanon, Xylol, 1,4-Dioxan, Diacetonalkohol, N-Methylpyrrolidon, Dimethylacetamid, Dimethylformamid, Dimethylsulfoxid, Methylethylketon oder beliebige Gemische solcher Lösungsmittel.

Bevorzugte Lösungsmittel hierbei sind die an sich in der Polyurethanchemie gängigen Lösemittel wie Butylacetat, Ethylacetat, 1-Methoxy-2-propylacetat, Toluol, 2-Butanon, Xylol, 1,4-Dioxan, Diacetonalkohol, N-Methylpyrrolidon, Dimethylacetamid, Dimethylformamid, Dimethylsulfoxid, Methylethylketon oder beliebige Gemische solcher Lösungsmittel.

Besonders bevorzugte Lösungsmittel sind Lösungsmittel wie Butylacetat, 1-Methoxy-2-propylacetat, Ethylacetat, Toluol, Xylol, Solvent Naphta (Kohlenwasserstoffgemisch) sowie deren Mischungen. Ketonische Lösungsmittel wie Methylethylketon eignen sich als Proxeßlösemittel, jedoch nicht als Lösungsmittel für das fertige Produkt.

In Bezug auf den Gehalt an später zur Vernetzung zur Verfügung stehenden NCO-Gruppen hat es sich als vorteilhaft erwiesen, auf Alkohole als Lösemittel sowohl für die Partikeldispersionen als auch als Prozesslösemittel während der Polyisocyanatmodifizierung zu verzichten, da hierbei ein vergleichsweise höherer Abbau von NCO-Gruppen während der Lagerung der daraus hergestellten nanopartikelmodifizierten Polyisocyanate zu beobachten ist. Werden die Polyisocyanate in einem zusätzlichen Schritt blockiert, so können auch Alkohole als Lösungsmittel eingesetzt werden.

In einer bevorzugten Ausführungsform der Erfindung werden als Partikel in C) anorganische Oxide, Mischoxide, Hydroxide, Sulfate, Carbonate, Carbide, Boride und Nitride von Elementen der 11 bis IV Hauptgruppe und/oder Elemente der 1 bis VIII Nebengruppe des Periodensystems einschließlich der Lanthanide verwendet. Besonders bevorzugte Partikel der Komponente C) sind Siliziumoxid, Aluminiumoxid, Ceroxid, Zirkonoxid, Nioboxid und Titanoxid. Ganz besonders bevorzugt sind Siliziumoxid-Nanopartikel.

Die in C) eingesetzten Partikel weisen bevorzugt mittlere Partikelgrößen mittels dynamischer Lichtstreuung in Dispersion bestimmt als Z-Mittelwert von 5 bis 100 nm, besonders bevorzugt 5 bis 50 nm auf.

Bevorzugt weisen wenigstens 75 %, besonders bevorzugt wenigstens 90 %, ganz besonders bevorzugt wenigstens 95 % aller in C) eingesetzten Partikel die vorstehend definierten Größen, auf.

Bevorzugt werden die Partikel oberflächenmodifiziert eingesetzt. Falls die in C) eingesetzten Partikel oberflächenmodifiziert sein sollen, werden sie vor Einarbeitung in das modifizierte Polyisocyanat beispielsweise unter Silanisierung umgesetzt. Diese Methode ist literaturbekannt und beispielsweise in DE-A 19846660 oder WO 03/44099 beschrieben.

Weiterhin können die Oberflächen adsorptiv/assoziativ durch Tenside mit Kopfgruppen entsprechender Wechselwirkungen zu den Teilchenoberflächen oder Blockcopolymere modifiziert werden, wie beispielsweise in WO 2006/008120 bzw. Foerster, S. & Antonietti, M., Advanced Materials, 10, no. 3, (1998) 195 modifiziert werden.

Bevorzugte Oberflächenmodifizierung ist die Silanisierung mit Alkoxysilanen und/oder Chlorsilanen. Ganz besonders bevorzugt handelt es sich um Silane, die neben den Alkoxygruppen inerte Alkyl- oder Aralkylreste aber keine weiteren funktionellen Gruppen tragen.

Beispiele kommerzieller Partikeldispersionen, wie sie sich für C) eignen sind Organosilicasol^{™} (Nissan Chemical America Corporation, USA), Nanobyk^{®} 3650 (BYK Chemie, Wesel, Deutschland), Hanse XP21/1264 oder Hanse XP21/1184 (Hanse Chemie, Hamburg, Deutschland), HIGHLINK^{®} NanO G (Clariant GmbH, Sulzbach, Deutschland). Geeignete Organosole weisen einen Feststoffgehalt von 10 bis 60 Gew.-%, bevorzugt 15 bis 50 Gew.-% auf.

Der Gehalt der in C) eingesetzten Partikel (gerechnet als Feststoff) bezogen auf das Gesamtsystem aus modifiziertem Polyisocyanat und Partikeln beträgt typischerweise 1 bis 70 Gew.-%, bevorzugt 5 bis 60, besonders bevorzugt 5 bis 40 Gew.-%, ganz besonders bevorzugt 5 bis 20 Gew.-%.

Der Feststoffgehalt erfindungsgemäßer, nanopartikelhaltiger PIC beträgt 20 bis 100 Gew.-%, bevorzugt 60 bis 100 Gew.-%, besonders bevorzugt 80 bis 100 Gew.-%. Eine ganz besonders bevorzugte Form ergibt 90 bis 100 %.

Werden Feststoffgehalte von 100 % für lösemittelfreie Polyisocyanate angestrebt, so liegt der Gehalt der in C) eingesetzten Partikel (gerechnet als Feststoff) bezogen auf das Gesamtsystem aus modifiziertem Polyisocyanat und Partikeln < 30 Gew.-%, bevorzugt < 20 Gew.-%, ganz besonders bevorzugt < 12 Gew.-%.

Die erfindungsgemäßen nanopartikelmodifizierten, hydrophilen Polyisocyanatgemische stellen transparente Produkte der vorstehend genannten Zusammensetzung dar, die gegebenenfalls auch in Lösemitteln, wie z. B. den oben genannten üblichen Lacklösemitteln, gelöster Form vorliegen können. Sie lassen sich in der Regel leicht, ohne Einsatz hoher Scherkräfte durch bloßes Einrühren in Wasser in scdimentationsstabile Dispersionen überführen.

Die hervorragende Dispergierbarkeit stellt insbesondere für die Verwendung der erfindungsgemäßen nanopartikelmodifizierten, hydrophilen Polyisocyanate in wässrigen 2K-PUR-Lacken einen Vorteil dar, da sich auf diese Weise hochvernetzte Beschichtungen erhalten lassen, die sich zusätzlich durch Eigenschaftsverbesserungen bedingt durch die anorganischen Nanopartikel auszeichnen. Die unter Verwendung der erfindungsgemäßen nanopartikelmodifizierten, hydrophilen Polyisocyanatgemische erhältlichen Lackfilme zeichnen sich durch eine hohe Härte und Elastizität, eine ausgezeichnete Witterungs- und Chemikalienbeständigkeit sowie einen hohen Glanz aus. Insbesondere die Kratzfestigkeit in Klarlacken, sowie überraschenderweise die Korrosionsschutzbeständigkeit in Grundierungen und Einschichtdecklacken sind durch erfindungsgemäße nanopartikelmodifizierten, hydrophilen Polyisocyanate verbessert im Vergleich zu den bisher bekannten hydrophilen Polyisocyanaten.

Gegebenenfalls können den erfindungsgemäßen nanopartikelmodifizierten hydrophilen Polyisocyanatgemische vor der Emulgierung noch weitere nichthydrophilierte Polyisocyanate, insbesondere Lackpolyisocyanate der oben unter A1) genannten Art, zugesetzt werden, wobei die Mengenverhältnisse bevorzugt so gewählt werden, dass die resultierenden Polyisocyanatgemische ebenfalls erfindungsgemäßen nanopartikelmodifizierten hydrophilen Polyisocyanatgemische darstellen, da diese im allgemeinen aus Gemischen aus
(i) erfindungsgemäß nanopartikelmodifizierten hydrophilen Polyisocyanatgemischen und
(ii) unmodifizierten Polyisocyanaten der beispielhaft genannten Art bestehen.

In solchen Mischungen übernehmen die erfindungsgemäßen nanopartikelmodifizierten hydrophilen Polyisocyanatgemische die Funktion eines Emulgators für den nachträglich zugemischten Anteil an nichthydrophilen Polyisocyanaten.

Die erfindungsgemäßen nanopartikelmodifizierten hydrophilen Polyisocyanatgemische stellen wertvolle Ausgangsmaterialien zur Herstellung von Polyurethan-Kunststoffen nach dem Isocyanat-Polyadditionsverfahren dar.

Ein weiterer Gegenstand der Erfindung sind die erfindungsgemäß erhältlichen nanopartikelmodifizierten Polyisocyanate sowie Polyurethansysteme, die diese enthalten. Gegenstand der Erfindung sind daher auch Beschichtungsmittel enthaltend die erfindungsgemäßen nanopartikelmodifizierten hydrophilen Polyisocyanatgemische.

In diesen Beschichtungsmitteln werden die hydrophilen Polyisocyanatgemische vorzugsweise in Form wässriger Emulsionen eingesetzt, die in Kombination mit in Wasser dispergierten Polyhydroxylverbindungen in unblockierter Form im Sinne von wässrigen ZweikomponentenSystemen, in mit Blockierungsmitteln der oben genannten Art blockierter Form im Sinne von wässrigen Einkomponenten-Systemen zur Umsetzung gebracht werden können.

Besonders bevorzugt worden die erfindungsgemäßen hydrophilen Polyisocyanatgemische als Vernetzer für in Wasser gelöste oder dispergierte Lackbindemittel oder Lackbindemittelkomponenten mit gegenüber Isocyanatgruppen reaktionsfähigen Gruppen, insbesondere alkoholischen Hydroxylgruppen, bei der Herstellung von Beschichtungen unter Verwendung von wässrigen Beschichtungsmitteln auf Basis derartiger Bindemittel bzw. Bindemittelkomponenten verwendet. Die Vereinigung des Vernetzers, gegebenenfalls in emulgierter Form, mit den Bindemitteln bzw. Bindemittelkomponenten kann hierbei durch einfaches Verrühren vor der Verarbeitung der Beschichtungsmittel nach beliebigen Methoden, durch Verwendung von dem Fachmann bekannten mechanischcn Hilfsmitteln oder auch unter Verwendung von Zweikomponenten-Spritzpistolen erfolgen.

Prinzipiell sind als Reaktionspartner für die erfindungsgemäßen Polyisocyanatgemische alle in Wasser gelösten oder dispergierten Bindemittel, die gegenüber Isocyanaten reaktive Gruppen aufweisen, geeignet.

In diesem Zusammenhang seien als Lackbindemittel oder Lackbindemittelkomponenten beispielhaft erwähnt: In Wasser gelöste oder dispergierte, Hydroxylgruppen aufweisende Polyacrylate, insbesondere solche des Molekulargewichtsbereichs 1 000 bis 10 000 g/mol, die mit organischen Polyisocyanaten als Vernetzer wertvolle Zweikomponenten-Bindemittel darstellen oder in Wasser dispergierte, gegebenenfalls Urethan-modifizierte, Hydroxylgruppen aufweisende Polyesterharze der aus der Polyester- und Alkydharzchemie bekannten Art. Zu den Bindemitteln zählen beispielsweise auch in Wasser dispergierte Polyurethane oder Polyharnstoffe, die aufgrund der in den Urethan- bzw. Harnstoffgruppen vorliegenden aktiven Wasserstoffatome mit Polyisocyanaten vernetzbar sind.

Bei der erfindungsgemäßen Verwendung als Vernetzerkomponente für wässrige Lackbindemittel werden die erfindungsgemäßen hydrophilen Polyisocyanatgemische im allgemeinen in solchen Mengen eingesetzt, die einem Äquivalentverhältnis von NCO-Gruppen zu gegenüber NCO-Gruppen reaktionsfähigen Gruppen, insbesondere alkoholischen Hydroxylgruppen, von 0,5:1 bis 2:1 entsprechen.

Gegebenenfalls können die erfindungsgemäßen hydrophilen Polyisocyanatgemische in untergeordneten Mengen auch nichtfunktionellen wässrigen Lackbindemitteln zur Erzielung ganz spezieller Eigenschaften, beispielsweise als Additiv zur Haftverbesserung zugemischt werden.

Als Untergründe für die mit Hilfe der erfindungsgemäßen hydrophilen Polyisocyanatgemische formulierten wässrigen Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Im allgemeinen besitzen die mit den erfindungsgemäßen Beschichtungsmittel formulierten wässrigen Beschichtungsmittel, denen gegebenenfalls die auf dem Lacksektor üblichen Hilfs- und Zusatzmittel, wie z. B. Verlaufshilfsmittel, Farbpigmente, Füllstoffe, Mattierungsmittel, anorganische oder organische Pigmente, Lichtschutzmittel, Lackadditive, wie Dispergier-, Verlauf-, Verdickungs-, Entschäumungs- und andere Hilfsmittel, Haftmittel, Fungizide, Bakterizide, Stabilisatoren oder Inhibitoren und Katalysatoren oder Emulgatoren, zugegeben werden können, schon bei Raumtemperaturtrocknung gute lacktechnische Eigenschaften.

Als Hilfs- und Zusatzstoffe können Lösemittel wie Butylacetat, Ethylacetat, 1-Methoxy-2-propylacetat, Toluol, 2-Butanon, Xylol, 1,4-Dioxan, Diacetonalkohol, N-Methytpyrrolidon, Dimethylacetamid, Dimethylformamid, Dimethylsulfoxid oder beliebige Gemische solcher Lösungsmittel verwendet werden. Bevorzugte Lösungsmittel sind Butylacetat, 2-Ethylacetat und Diacetonalkohol.

Selbstverständlich lassen sie sich jedoch auch unter forcierten Bedingungen bei erhöhter Temperatur bzw. durch Einbrennen bei Temperaturen bis 260 °C trocknen.

Neben der bevorzugten Verwendung als Vernetzerkomponenten für wässrige 2K-PUR-Lacke eignen sich die erfindungsgemäßen nanopartikelmodifizierten, hydrophilen Polyisocyanatgemische sowie die darauf basierenden Polyurethansysteme allgemein für die Herstellung von Polyurethanklebstoffen, Polyurethanlacken und Polyurethanbeschichtungen sowie hervorragend als Vernetzer für wässrige Dispersionsklebstoffe, Leder- und Textilbeschichtungen oder Textildruckpasten, als AOX-freie Papierhilfsmittel oder auch als Zusatzmittel für mineralische Baustoffe, beispielsweise Beton- oder Mörtelmassen.

Die Applikation des crfindungsgemäßen Polyurethansysteme auf Substrate erfolgt nach den in der Beschichtungstechnologie üblichen Applikationsverfahren, wie z. B. Spritzen, Fluten, Tauchen, Schleudern oder Rakeln.

### Beispiele:

Soweit nicht abweichend vermerkt, sind die Prozentangaben als Gewichtsprozent zu verstehen.

Die Bestimmung der Hydroxylzahl (OH-Zahl) erfolgte gemäß DIN 53240-2.

Die Viskositätsbestimmung erfolgte mittels Rotationsviskosimeter "RotoVisco 1" der Fa. Haake, Deutschland gemäß DIN EN ISO 3219/A.3.

Die Bestimmung der Säurezahl erfolgte gemäß DIN EN ISO 2114.

Die Farbzahlbestimmung (APHA) erfolgte gemäß DIN EN 1557.

Die Bestimmung des NCO-Gehaltes erfolgte gemäß DIN EN ISO 11909.

Die Bestimmung des Restmonomerengchaltes erfolgte gemäß DIN EN ISO 10 283

Butoxyl: Abkürzung für 3-Methoxy-n-butylacetat

Organosilicasol^{™} MEK-ST: kolloidales Silica dispergiert in Methylethylketon, Teilchengröße 10-15 um, 30 wt% SiO₂, < 0,5 wt% H₂O, < 5 mPa s Viskosität, Nissan Chemical America Corporation, USA.

Dynasylan^{®} 1189: N-(n-Butyl)-3-Aminopropyltrimethoxysilan, Fa. Degussa / Evonik AG, Deutschland.

Surfynol^{®} 104 BC: nichtionisches oberflächenaktives Tensid, Fa. AirProducts, Deutschland.

Borchigel^{®} PW 25, Verdickungsmittel, Fa OMG Borchers GmbH, Deutschland.

Baysilone^{®} LA 200, Entschäumer/Entlüftungsmittel, Fa OMG Borchers GmbH, Deutschland.

Baysilone^{®} 3468, Netzmittel, Fa OMG Borchers GmbH, Deutschland.

Borchigen^{®} SN 95: Netz- und Dispergieradditiv, Fa OMG Borchers GmbH, Deutschland.

Tronox^{®} R-KB-4: Titandioxidpigment, Fa.Tronox Inc., Deutschland.

Tinuvin^{®} 292, 1130 : Lichtschutzmittel, Fa. Ciba AG, Schweiz.

Dynasylan^{®} GLYMO : 3-Glycidyloxypropyltrimothoxysilan, Fa. Degussa / Evonik AG, Deutschland.

Bayhydrol^{®} XP 2470: Wasserverdünnbare, OH-funktionelle Polyacrylatdispersion, Lieferform ca. 45%ig in Wasser/Solventnaphtha® 100/Dowanol^{®} PnB, neutralisiert mit Dimethylethanolamin/Triethanolamin, Viskosität bei 23 °C 2000 ± 500 mPa·s, OH-Gehalt ca. 3,9 %, Säurezahl ca. 10 mg KOH/g (Bayer MaterialScience AG/Leverkusen, Deutschland)

Bayhydrg^{®} XP 2645 Wasserverdünnbare, OH-funktionelle Polyacrylatdispersion, Lieferform ca. ca. 43 %ig in Wasser/Solventnaphtha 100/Dowanol® PnB, neutralisiert mit Dimethylethanolamin, Viskosität bei 23 °C 500 - 4.000 mPa·s, OH-Gehalt ca. 4,5 %, Säurezahl ca. 9 mg KOH/g (Bayer MaterialScience AG/Leverkusen, Deutschland)

Bayhydrol^{®} XP 2695 Wasserverdünnbare, OH-funktionelle Polyacrylatdispersion, Lieferform ca. ca. 41 %ig in Wasser/1-Butoxy-2-propanol, neutralisiert mit Triethanolamin/Dimethylethanolamin (3:1), , Viskosität bei 23 °C ca. 2500 mPa·s, OH-Gehalt ca. 5,0 %, Säurezahl ca. 9,4 mg KOH/g (Bayer MaterialScience AG/Leverkusen, Deutschland)

### Bestimmung der Teilchengröße

Die Teilchengrößen wurden mittels Dynamischer Lichtstreuuung mit einem HPPS particle size analyzer (Fa. Malvern, Worcestershire, UK) bestimmt. Die Auswertung erfolgte über die Dispersion Technology Software 4,10. Um Mehrfachstreuung zu vermeiden wurde eine hochverdünnte Dispersion der Nanopartikel hergestellt. Ein Tropfen einer verdünnten Nanopartikeidispersion (ca. 0,1 - 10 %) wurde in eine Küvette enthaltend ca. 2 ml des gleichen Lösemittels wie die Dispersion gegeben, geschüttelt und im HPPS analyzer bei 20 bis 25 °C vermessen. Wie dem Fachmann allgemein bekannt, wurden vorher die relevanten Parameter des Dispergiermediums - Temperatur, Viskosität und Brechungsindex - in die Software eingegeben. Im Falle organischer Lösemittel wurde eine Glasküvette eingesetzt. Als Resultat wurde eine Intensitäts- bzw. Volumen- Teilchendurchmesser-Kurve sowie der Z-Mittelwert für den Teilchendurchmesser erhalten. Es wurde darauf geachtet, daß der Polydispersitätsindex < 0,5 war.

***Pendeldämpfung (König)*** nach DIN EN ISO 1522 "Pendeldämpfungsprüfung"

***Kratzfestigkeit Laborwaschanlage (Nassverkratzung)*** nach DIN EN ISO 20566 "Beschichtungsstoffe - Prüfung der Kratzfestigkeit eines Beschichtungssystems mit einer Laborwaschanlage"

***Glanz-*/*Hazemessung nach*** DIN EN ISO 13803 "Bestimmung des Glanzschleiers von Beschichtungen (Haze) bei 20°" und DIN EN ISO 2813 "Bestimmung des Reflektometerwertes von Beschichtungen"

### Bestimmung der Lösemittelbeständigkeit

Mit dieser Prüfung wurde die Widerstandsfähigkeit eines ausgehärteten Lackfilmes gegen verschiedene Lösemittel festgestellt. Hierzu lässt man die Lösemittel für eine bestimmte Zeit auf die Lackoberfläche einwirken. Anschließend wird visuell und durch Abtasten mit der Hand beurteilt, ob und welche Veränderungen auf der Prüffläche aufgetreten sind. Der Lackfilm befindet sich in der Regel auf einer Glasplatte, andere Substrate sind ebenfalls möglich. Der Reagenzglasständer mit den Lösemitteln Xylol, 1-Methoxypropylacctat-2, Ethylacetat und Aceton (s.u.) wird so auf die Lackoberfläche aufgesetzt, dass die Öffnungen der Reagenzgläser mit den Wattepfropfen auf dem Film aufliegen. Wichtig ist die dadurch entstehende Benetzung der Lackoberfläche durch das Lösemittel. Nach der festgelegten Einwirkzeit der Lösemittel von 1 Minute und 5 Minuten wird der Reagenzglasständer von der Lackoberfläche entfernt. Anschließend werden die Lösemittelreste sofort mittels eines saugtähigen Papiers oder Textilgewebe entfernt. Man mustert nun sofort die Prüffläche nach behutsamem Kratzen mit dem Fingernagel visuell auf Veränderungen ab. Folgende Stufen werden unterschieden:

| | |
|---|---|
| 0 = unverändert | |
| 1 = Spur verändert | z.B, nur sichtbare Veränderung |
| 2 = gering verändert | z.B. mit Fingernagel spürbare Erweichung feststellbar |
| 3 = merklich verändert | z.B. mit dem Fingernagel starke Erweichung feststellbar |
| 4 = stark verändert | z.B. mit dem Fingernagel bis zum Untergrund |
| 5 = zerstört | z.B. ohne Fremdeinwirkung Lackoberfläche zerstört |

Die gefundenen Bewertungsstufen für die oben angegebenen Lösemittel werden in der folgenden Reihenfolge dokumentiert:

| | |
|---|---|
| Beispiel | 0000 (keine Veränderung) |
| Beispiel | 0001 (sichtbare Veränderung nur bei Aceton) |

Dabei beschreibt die Zahlenreihenfolge die Reihenfolger der ausgetesteten Lösungsmittel (Xylol, Methoxypropylacctat, Ethylacetat, Aceton)

### Bestimmung der Kratzfestigkeit mittels Hammertest (Trockenverkratzung)

Die Verkratzung wird mit einem Hammer (Gewicht: 800 g ohne Stiel) durchgeführt, an dessen flacher Seite Stahlwolle 00 befestigt wird. Dazu wird der Hammer vorsichtig im rechten Winkel auf die beschichtete Oberfläche aufgesetzt und ohne zu verkanten und ohne zusätzliche Körperkraft in einer Spur über die Beschichtung geführt. Es werden 10 Doppelhübe durchgeführt. Nach der Belastung mit dem Verkratzungsmedium wird die Prüffläche mit einem weichen Tuch gereinigt und anschließend der Glanz nach DIN EN ISO 2813 quer zur Verkratzungsrichtung gemessen. Es dürfen nur homogene Bereiche vermessen werden. Üblich sind Angaben zur Verkratzung dann in % Glanzerhalt oder-verlust relativ zum Ausgangsglanz

***Kondenswassertest nach*** DIN EN ISO 6270/2 CH, "Paints and varnishes - Determination of resistance to humidity"

***Salzsprühtest nach*** DIN EN ISO 9227 NSS: "Corrosion tests in artificial atmospheres - Satt spray tests"

***Beurteilung der Schäden jeweils*** nach DIN EN ISO 4628. "Paints and varnishes - Evaluation of degradation of coatings - Designation of quantity and size of defects, and of intensity of uniform changes in appearance"

***Bewitterung (CAM 180): UV Schnellbewitterung*** nach SAE J2527 CAM 180, "Performance Based Standard for Accelerated Exposure of Automotive Exterior Materials Using a Controlled Irradiance Xenon-Arc Apparatus"

### Ausgangspolyisocyanat A)-1 enthaltend Emulgatortyp D4):

Eine Mischung aus 400 g (2,07 val) eines Isoeyanuratgruppen-haltigen Polyisocyanates auf Basis von 1,6-Diisocyanatohexan (HDI) mit einem NCO-Gehalt von 21,7 %, einer mittleren NCO-Funktionalität von 3,5 (nach GPC), einem Gehalt an monomerem HDI von 0,1 % und einer Viskosität von 3000 mPas (23 °C) und 600 g (3,36 val) eines Iminooxadiazindiongruppen-haltigen Polyisocyanates auf Basis von HDI mit einem NCO-Gehalt von 23,5 %, einer mittleren NCO-Funktionalität von 3,1 (nach GPC), einem Gehalt an monomerem HDI von 0,2 % und einer Viskosität von 700 mPas (23 °C) werden zusammen mit 30 g (0,14 val) 3-(Cyclohexylamino)-propan-sulfonsäure (RAPS) und 18 g (0,14 mol) Dimethylcyclohexylamin unter trockenem Stickstoff 10 Stunden bei 80 °C gerührt. Nach Abkühlen auf Raumtemperatur liegt ein praktisch farbloses klares Polyisocyanatgemisch mit folgenden Kenndaten vor:

| | |
|---|---|
| Festgehalt: | 100 % |
| NCO-Gehalt: | 21,2 % |
| NCO-Funktionalität: | 3,2 |
| Viskosität (23 °C): | 3500 mPas |
| Farbzahl: | 60 APHA |

### Ausgangspolyisocyanat A)-2 enthaltend Emulgatortyp D1):

870 g (4,50 val) des bei der Herstellung des Ausgangspolyisocyanates A)-1 beschriebenen Isocyanuratgruppen-haltigen Polyisocyanates auf Basis von HDI werden bei 100 °C unter trockenem Stickstoff und Rühren vorgelegt, innerhalb von 30 min mit 130 g (0,37 val) eines auf Methanol gestarteten, monofunktionellen Polyethylenoxidpolyethers eines mittleren Molekulargewichtes von 350 versetzt und bei dieser Temperatur weiter gerührt, bis der NCO-Gehalt der Mischung nach etwa 2 h auf einen Wert von 17,4 % gefallen ist. Nach Abkühlen auf Raumtemperatur liegt ein farbloses, klares Polyisocyanatgemisch mit folgenden Kenndaten vor:

| | |
|---|---|
| Festgehalt: | 100 % |
| NCO-Gehalt: | 17,4 % |
| NCO-Funktionalität: | 3,2 |
| Viskosität (23 °C): | 2800 mPas |
| Farbzahl: | 40 APHA |

### Ausgangspolyisocyanat A)-3 enthaltend Emulgatortyp D3):

910 g (4,70 val) des bei der Herstellung des Ausgangspolyisocyanates A)-1 beschriebenen Isocyanuratgruppen-haltigen Polyisocyanates auf Basis von HDI werden bei 100 °C unter trockenem Stickstoff und Rühren vorgelegt, innerhalb von 30 min mit 90 g (0,18 val) eines auf Methanol gestarteten, monofunktionellen Polyethylenoxidpolyethers eines mittleren Molekulargewichtes von 500 versetzt und anschließend bei dieser Temperatur weitergerührt, bis der NCO-Gehalt der Mischung nach etwa 2 h auf den einer vollständigen Urethanisierung entsprechenden Wert von 18,7 % gefallen ist. Anschließend gibt man 0,01 g Zink-(II)-2-ethyl-1-hexanoat als Allophanatisierungskatalysator zu. Dabei steigt die Temperatur des Reaktionsgemisches aufgrund der freiwerdenden Reaktionswärme bis auf 106 °C an. Nach Abklingen der Exothermie, etwa 30 min nach Katalysatorzugabe, wird die Reaktion durch Zugabe von 0,01 g Benzoylchlorid abgebrochen und das Reaktionsgemisch auf Raumtemperatur abgekühlt. Es liegt ein praktisch farbloses klares Polyisocyanatgemisch mit folgenden Kenndaten vor:

| | |
|---|---|
| Festgehalt: | 100 % |
| NCO-Gehalt: | 18,2 % |
| NCO-Funktionalität: | 3,5 |
| Viskosität (23 °C): | 4000 mPas |
| Farbzahl: | 60 APHA |

### Ausgangspolyisocyanat A)-4 enthaltend Emulgatortyp D3):

Nach dem für Ausgangspolyisocyanat A)-3 beschriebenen Verfahren werden 860 g (4,44 val) des dort beschriebenen Isocyanuratgruppen-haltigen HDI-Polyisocyanates und 140 g (0,28 val) des dort beschriebenen Polyethylenoxidpolyethers in Gegenwart von 0,01 g Zink-(II)-2-ethyl-1-hexanoat als Allophanatisierungskatalysator zu einem farblosen klaren Polyisocyanatgemisch mit folgenden Kenndaten umgesetzt:

| | |
|---|---|
| Festgehalt: | 100 % |
| NCO-Gehalt: | 16,2 % |
| NCO-Funktionalität: | 4,0 |
| Viskosität (23 °C): | 6500 mPas |
| Farbzahl: | 60 APHA |

### Ausgangspolyisocyanat A)-5 enthaltend Emulgatortyp D4):

Nach dem für Ausgangspolyisocyanat A)-1 beschriebenen Verfahren werden 980 g (5,06 val) des dort beschriebenen Isocyanuratgruppen-haltigen HDI-Polyisoeyanates, 20 g (0,09 val) CAPS, 11 g (0,09 mol) Dimethylcyclohexylamin zu einem farblosen klaren Polyisocyanatgemisch mit folgenden Kenndaten umgesetzt:

| | |
|---|---|
| Festgehalt: | 100 % |
| NCO-Gehalt: | 20,6 % |
| NCO-Funktionalität: | 3,4 |
| Viskosität (23 °C): | 5400 mPas |
| Farbzahl: | 40 APHA |

### Ausgangspolyisocyanat A)-6 enthaltend Emulgatortyp D5):

890 g (4,60 val) des bei der Herstellung des Ausgangspolyisocyanates A)-1 beschriebenen Isocyanuratgruppen-haltigen Polyisocyanates auf Basis von HDI werden 12 Stunden bei 80°C mit 110 g eines Emulgatorgemisches, bestehend aus 97 g eines ethoxylierten Tridecylalkoholphosphats (Rhodafac^{®} RS-710, Fa. Rhodia) und 13 g Dimethylcyclohexylamin als Neutralisationsamin, gerührt. Nach Abkühlen auf Raumtemperatur liegt ein farbloses klares Polyisocyanatgemisch mit folgenden Kenndaten vor:

| | |
|---|---|
| Festgehalt: | 100 % |
| NCO-Gehalt: | 19,3 % |
| NCO-Funktionalität: | 3,5 |
| Viskosität (23 °C): | 3000 mPas |
| Farbzahl: | 30 APHA |

### Ausgangspolyisocyanat A1-1

Isocyanuratgruppen-haltigen Polyisocyanates auf Basis von 1,6-Diisocyanatohexan (HDI) mit einem NCO-Gehalt von 23 ± 0,5 %, einem Gehalt an monomerem HDI von ≤ 0,2 %, einer Farbzahl < 40 und einer Viskosität von 1200 ± 300 mPas (23 °C).

### Ausgangspolyisocyanat A1-2

Iminooxadiazindiongruppen-haltiges Polyisocyanat auf Basis von HDI mit einem NCO-Gehalt von 23,5 ± 0,5 %, einer einem Gehalt an monomerem HDI von < 0,3 %, einer Farbzahl < 40 und einer Viskosität von 700 ± 100 mPas (23 °C)

### Beispiel 1

N-(3-Trimethoxysilylpropyl)asparaginsäurediethylester wurde, entsprechend der Lehre aus US-A 5 364 955, Beispiel 5, durch Umsetzung von äquimolaren Mengen 3-Aminopropyltrimethoxysilan mit Maleinsäurediethylester hergestellt.

### Beispiel 2

In einer Standard-Rührapparatur wurden 1287,5 g Ausgangspolyisocyanat A)-1 in 700 g Methylethylketon bei Raumtemperatur vorgelegt und Stickstoff mit 2L/h übergeleitet. Dann wurden innerhalb von 2 h unter Rühren bei Raumtemperatur 112,5 g (0,05 val) des Alkoxysilans aus Beispiel 1 in 700 g Methylethylketon zugetropft, bis der theoretische NCO-Gehalt erreicht war. Die Temperatur wurde währenddessen bei maximal 40 °C gehalten.

1279,5 g des derart alkoxysilan-modifizierten Polyisocyanats wurden mit 220,5 g Nissan Organosol MEK-ST gemischt und am Rotationsverdampfer bei 60 °C und 120 mbar auf einen Feststoffgehalt von 100 % eingestellt.

Man erhielt ein transparentes, flüssiges Polyisocyanat mit folgenden Kennzahlen: Feststoffgehalt 100 Gew.-%, NCO-Cehalt 15,99 %, Viskosität 12.700 mPas (23 °C), Teilchengröße 54,2 nm, 10 % SiO2-Gehalt.

### Beispiel 3

In einer Standard-Rührapparatur wurden 1106,6 g Ausgangspolyisocyanat A)-1 bei Raumtemperatur vorgelegt vorgelegt und Stickstoff mit 2L/h übergeleitet. Dann wurden innerhalb von 2 h bei Raumtemperatur 193,4 g (0,1 val) des Alkoxysilans aus Beispiel 1, bis der theoretische NCO-Gehalt erreicht war. Die Temperatur wurde währenddessen bei maximal 40 °C gehalten.

1080 g des derart alkoxysilan-modifizierten Polyisocyanats wurden mit 378,5 g Nissan Organosol MEK-ST gemischt und am Rotationsverdampfer bei 60 °C und 120 mbar auf einen Feststoffgehalt von 100 % eingestellt.

Man erhielt ein transluzentes, flüssiges Polyisocyanat mit folgenden Kennzahlen: Feststoffgehalt 100 Gew.-%, NCO-Gehalt 13,3 %, Viskosität 24.900 mPas (23 °C), Teilchengröße 54,6 nm, 10 % SiO2-Gehalt.

### Beispiel 4

In einer Standard-Rührapparatur wurden 466,1 g Ausgangspolyisocyanat A)-2 in 250 g Methylethylketon bei Raumtemperatur vorgelegt und Stickstoff mit 2L/h übergeleitet. Dann wurden innerhalb von 2 h unter Rühren bei Raumtemperatur 33,9 g (0,05 val) des Alkoxysilans aus Beispiel 1 in 250 g Methylethylketon zugetropft, bis der theoretische NCO-Gehaft erreicht war. Die Temperatur wurde währenddessen bei maximal 40 °C gehalten.

508,4 g des derart alkoxysilan-modifizierten Polyisocyanats wurden mit 91,6 g Nissan Organosol MEK-ST gemischt und am Rotationsverdampfer bei 60 °C und 120 mbar auf einen Feststoffgehalt von 100 % eingestellt.

Man erhielt ein transparentes, flüssiges Polyisocyanat mit folgenden Kennzahlen: Feststoffgehalt 100 Gew.-%, NCO-Gehalt 13,22 %, Viskosität 7.400 mPas (23 °C), Teilchengröße 31,4 nm, 10 % SiO2-Gehalt.

### Beispiel 5

In einer Standard-Rührapparatur wurden 465,0 g Ausgangspolyisocyanat A)-3 in 250 g Methylethylketon bei Raumtemperatur vorgelegt und Stickstoff mit 2L/h übergeleitet. Dann wurden innerhalb von 2 h unter Rühren bei Raumtemperatur 34,99 g (0,05 val) des Alkoxysilans aus Beispiel 1 in 250 g Methylethylketon zugetropft, bis der theoretische NCO-Gehalt erreicht war. Die Temperatur wurde währenddessen bei maximal 40 °C gehalten.

937,2 g des derart alkoxysilan-modifizierten Polyisocyanats wurden mit 162,8 g Nissan Organosol MEK-ST gemischt und am Rotationsverdampfer bei 60 °C und 120 mbar auf einen Feststoffgehalt von 100 % eingestellt.

Man erhielt ein transparentes, flüssiges Polyisocyanat mit folgenden Kennzahlen: Feststoffgehalt 100 Gew.-%, NCO-Gehalt 13,5 %, Viskosität 17.100 mPas (23 °C), Teilchengröße 46,7 nm, 10 % SiO2-Gehalt.

### Beispiel 6

In einer Standard-Rührapparatur wurden 468,3 g Ausgangspolyisocyanat A)-4 in 250 g Methylethylketon bei Raumtemperatur vorgelegt und Stickstoff mit 2L/h übergeleitet. Dann wurden innerhalb von 2 h unter Rühren bei Raumtemperatur 31,7 g (0,05 val) des Alkoxysilans aus Beispiel 1 in 250 g Methylethylketon zugetropft, bis der theoretische NCO-Gehalt erreicht war. Die Temperatur wurde währenddessen bei maximal 40 °C gehalten.

510 g des derart alkoxysilan-modifizierten Polyisocyanats wurden mit 90 g Nissan Organosol MEK-ST gemischt und am Rotationsverdampfer bei 60 °C und 120 mbar auf einen Feststoffgehalt von 100 % eingestellt.

Man erhielt ein transparentes, flüssiges Polyisocyanat mit folgenden Kennzahlen: Feststoffgehalt 100 Gew.-%, NCO-Gehalt 12,55 %, Viskosität 16.300 mPas (23 °C), Teilchengröße 34,6 nm, 10 % SiO2-Gehalt.

### Beispiel 7

In einer Standard-Rührapparatur wurden 472,7 g Ausgangspolyisocyanat A)-5 in 250 g Methylethylketon bei Raumtemperatur vorgelegt und Stickstoff mit 2L/h übergeleitet. Dann wurden innerhalb von 2 h unter Rühren bei Raumtemperatur 27,3 g (0,05 val) Dynasilan 1189 in 250 g Methylethylketon zugetropft, bis der theoretische NCO-Gehalt erreicht war. Die Temperatur wurde währenddessen bei maximal 40 °C gehalten.

935 g des derart alkoxysilan-modifizierten Polyisocyanats wurden mit 165 g Nissan Organosol MEK-ST gemischt und am Rotationsverdampfer bei 60 °C und 120 mbar auf einen Feststoffgehalt von 100 % eingestellt.

Man erhielt ein transparentes, flüssiges Polyisocyanat mit folgenden Kennzahlen: Feststoffgehalt 100 Gew.-%, NCO-Gehalt 16,14 %, Viskosität 17.700 mPas (23 °C), Teilchengröße 68,9 nm, 10 % SiO2-Gehalt.

### Beispiel 8

In einer Standard-Rührapparatur wurden 467,3 g Ausgangspolyisocyanat A)-6 in 350 g Butylacetat bei Raumtemperatur vorgelegt und Stickstoff mit 2L/h übergeleitet. Dann wurden innerhalb von 2 h unter Rühren bei Raumtemperatur 32,7 g (0,05 val) des Alkoxysilans aus Beispiel 1 in 150 g Butylacetat zugetropft, bis der theoretische NCO-Gehalt erreicht war. Die Temperatur wurde währenddessen bei maximal 40 °C gehalten.

466,8 g des derart alkoxysilan-modifizierten Polyisocyanats wurden mit 79,6 g Nissan Organosol MEK-ST gemischt und am Rotationsverdampfer bei 60 °C und 120 mbar auf einen Feststoffgehalt von 100 % eingestellt.

Man erhielt ein transparentes, flüssiges Polyisocyanat mit folgenden Kennzahlen: Feststoffgehalt 100 Gew.-%, NCO-Gehalt 13,16 %, Viskosität 7400 mPas (23 °C), Teilchengröße 21,4 nm, 10 % SiO2-Gehalt.

### Beispiel 9

In einer Standard-Rührapparatur wurden 466,1 g Ausgangspolyisocyanat A)-2 in 250 g Methoxypropylacetat bei Raumtemperatur vorgelegt und Stickstoff mit 2L/h übergeleitet. Dann wurden innerhalb von 2 h unter Rühren bei Raumtemperatur 33,9 g (0,05 val) des Alkoxysilans aus Beispiel 1 in 250 g Methoxypropylacetat zugetropft, bis der theoretische NCO-Gehalt erreicht war. Die Temperatur wurde währenddessen bei maximal 40 °C gehalten.

481,6 g des derart alkoxysilan-modifizierten Polyisocyanats wurden mit 268,4 g Nissan Organosol MEK-ST gemischt und am Rotationsverdampfer bei 60 °C und 120 mbar auf einen Feststoffgehalt von 65 % eingestellt. Anschließend wurden 750 ml Methoxypropylacetat hinzugefügt und erneut am Rotationsverdampfer bei 60 °C und 120 mbar auf einen Feststoffgehalt von 65 % eingestellt.

Man erhielt ein transparentes, flüssiges Polyisocyanat mit folgenden Kennzahlen: Feststoffgehalt 69,1 Gew.-%, NCO-Gehalt 7,23 %, Viskosität 162 mPas (23 °C), Teilchengröße 29,2 nm, 26 % SiO2-Gehalt im Festkörper.

### Beispiel 10 (Vergleich)

In einer Standard-Rührapparatur wurden 397,5 g Ausgangspolyisocyanat A1-1 in 250 g Butylacetat bei Raumtemperatur vorgelegt und Stickstoff mit 2L/h übergeleitet. Dann wurden innerhalb von 2 h unter Rühren bei Raumtemperatur 102,5 g (0,2 val) Dynasilan 1189 in 250 g Butylacetat zugetropft, bis der theoretische NCO-Gehalt erreicht war. Die Temperatur wurde währenddessen bei maximal 40 °C gehalten.

936 g des derart alkoxysilan-modifizierten Polyisocyanats wurden mit 164 g Nissan Organosol MEK-ST gemischt und am Rotationsverdampfer bei 60 °C und 120 mbar auf einen Feststoffgehalt von 100 % eingestellt.

Man erhielt ein transparentes, flüssiges Polyisocyanat mit folgenden Kennzahlen: Feststoffgehalt 100 Gew.-%, NCO-Gehalt 12,3 %, Viskosität 8100 mPas (23 °C), Teilchengröße 32,8 nm, 10 % SiO2-Gehalt im Festkörper.

### Beispiel 11 (Vergleich)

In einer Standard-Rührapparatur wurden 883,6 g Ausgangspolyisocyanat A1-2 in 500 g Methylethylketon bei Raumtemperatur vorgelegt und Stickstoff mit 2L/h übergeleitet. Dann wurden innerhalb von 2 h unter Rühren bei Raumtemperatur 116,4 g (0,1 val) Dynasilan 1189 in 500 g Methylethylketon zugetropft, bis der theoretische NCO-Gehalt erreicht war. Die Temperatur wurde währenddessen bei maximal 40 °C gehalten.

939,4 g des derart alkoxysilan-modifizierten Polyisocyanats wurden mit 160,6 g Nissan Organosol MEK-ST gemischt und am Rotationsverdampfer bei 60 °C und 120 mbar auf einen Feststoffgehalt von 100 % eingestellt.

Man erhielt ein transparentes, flüssiges Polyisocyanat mit folgenden Kennzahlen: Feststoffgehalt 100 Gew.-%, NCO-Gehalt 15,9 %, Viskosität 3250 mPas (23 °C), Teilchengröße 40,2 nm, 10 % SiO2-Gehalt im Festkörper.

### Beispiel 12 Lackfomulierungen Klarlack

| | 1 | 2 | 3 | 4 | 5 | 6 |
|---|---|---|---|---|---|---|
| **Polyol Bayhydrol-Type** | XP | XP | XP | XP | XP | XP |
| | 2645 | 2645 | 2470 | 2470 | 2695 | 2695 |
| FK % | 43 | 43 | 45 | 45 | 41 | 41 |
| OH % | 4,5 | 4,5 | 3,9 | 3,9 | 5,00 | 5,00 |
| **Polyisocyanat** | A)-5 | Bsp. 7 | A)-5 | Bsp.7 | A)-5 | Bsp. 7 |
| FK % | 100 | 100 | 100 | 100 | 100 | 100 |
| NCO % | 20,6 | 16,14 | 20,6 | 16,14 | 20,6 | 16,14 |
| SiO2-Anteil im PIC % | 0 | 10 | 0 | 10 | 0 | 10 |
| NCO:OH | 1,5 | 1,5 | 1,5 | 1,5 | 1,5 | 1,5 |
| **Komponente 1** | | | | | | |
| XP 2645 | 89,0 | 100,0 | | | | |
| XP 2470 | | | 101,6 | 91,2 | | |
| XP 2695 | | | | | 99,9 | 88,4 |
| Surfynol 104 BC ( Lff. 50%ig) | 2,3 | 2,3 | 2,3 | 2,3 | 2,3 | 2,3 |
| Borchigel PW 25 (Lff. 25%ig) | 0,3 | 0,3 | 0,3 | 0,3 | 0,3 | 0,3 |
| Baysilone 3468 (10%ig in BG gelöst) | 1,9 | 1,9 | 1,9 | 1,9 | 1,9 | 1,9 |
| Tinuvin 292 | 0,8 | 0,8 | 0,8 | 0,8 | 0,8 | 0,8 |
| Tinuvin 1130 | 1,6 | 1,6 | 1,6 | 1,6 | 1,6 | 1,6 |
| demin. H20 auf DIN 6 40 sek. | 10,1 | 10,0 | 10,0 | 8,1 | 10,8 | 9,3 |
| Gesamtkomp.1 | 106,0 | 116,9 | 118,5 | 106,2 | 117,6 | 104,6 |
| **Komponente 2** | | | | | | |
| Bsp 7 (80%ig in 3-Methoxy-n-butylacetat) | | 55,5 | | 46,0 | | 52,0 |
| Bsp. A)-5 (80%ig in 3-Methoxy-n-butylacetat) | 38,7 | | 40,1 | | 46,1 | |
| **Gesamtkomp.1+2** | 144,7 | 172,4 | 158,6 | 152,2 | 163,7 | 156,5 |
| demin. H2O auf Spritzv. | 33,0 | 45,4 | 33,5 | 30,3 | 37,3 | 35,9 |
| Spritzviskosität DIN 4 (ca. 25 sek.) | 24,0 | 23,0 | 22,0 | 26,0 | 25,0 | 22,0 |
| Festkörper in % | 41,1 | 41,9 | 42,5 | 44,7 | 40,6 | 42,4 |
| **Nano-Anteil im Festkörper (%)** | **0,0** | **4,9** | **0,0** | **4,5** | **0,0** | **5,1** |

### Vergleichsbeispiele 12.1, 12.3, 12.5; erfindungsgemäße Beispiele 12.2, 12.4, 12.6

Die Polyolmischung wurde jeweils vorgelegt, Additive und Lichtschulzmittel zugewogen und unter Rühren gut vermischt. Anschließend wurde mit demineralisiertem Wasser auf Auslauf Viskosität 40 sek (DIN 6 Becher) eingestellt. Nach einem Tag Ruhezeit (zum Entlüften) wurden das Polyisocyanat / Lösemittelgemisch zugegeben, nochmals gut verrührt und mit demin. Wasser auf Spritzviskosität 25 sek. (DIN 4 Becher) eingestellt.

Der Lack wurde dann mit einer Fließbecherpistole Sata Digital RP 2 (Düse 1.4 mm) in 1,5 Kreuzgängen auf den vorbereiteten Untergrund appliziert. Nach einer Ablüftzeit von 30 min. wurde der Lack bei 60°C für 30 min. getrocknet. Die Trockenschichtdicke betrug jeweils ca. 50-60 µm.

### Beispiel 13 Lacktechnologische Prüfung Klarlacke aus Beispiel 12

| | 1 | 2 | 3 | 4 | 5 | 6 |
|---|---|---|---|---|---|---|
| Polyol | XP | XP | XP | XP | XP | XP |
| | 2645 | 2645 | 2470 | 2470 | 2695 | 2695 |
| Polyisocyanat | A)-5 | Bsp. 7 | A)-5 | Bsp. 7 | A)-5 | Bsp. 7 |
| SiO2-Anteil im PIC % | 0 | 10 | 0 | 10 | 0 | 10 |
| **Trocknung [h]** | | | | | | |
| T1 | 2 | 2 | 1,5 | 1,5 | 1,5 | 1,5 |
| T2 | 5,5 | 5,5 | 4 | 5 | 4 | 4 |
| T3 | >6 | >6 | 5,5 | 5,5 | 5,5 | 5,5 |
| T4 | >6 | >6 | >6 | >6 | >6 | >6 |
| **Schichtdicke in** µ**m** | 46,0 | 48,0 | 60,0 | 60,0 | 52,0 | 60,0 |
| Glanz | 86,6 | 86,9 | 86,6 | 87,0 | 82,9 | 85,1 |
| Haze | 12,7 | 8,9 | 8,0 | 6,1 | 29,5 | 21,6 |
| **Kratzfestigkeit Hammertest / Stahl-**wolle | | | | | | |
| Restglanz nach Belastung | 37,8 | 45,3 | 47,4 | 52,5 | 47,5 | 53,0 |
| Restglanz nach Reflow (2h 60°C) | 75,4 | 80,3 | 77,6 | 79,3 | 72,1 | 81,5 |
| rel. Restglanz nach Belastung [%] | 43,6 | 52,1 | 54,7 | 60,3 | 57,3 | 62,3 |
| rel. Restglanz nach Reflow (2h 60°C) [%] | 87,1 | 92,4 | 89,6 | 91,1 | 87,0 | 95,8 |
| **Pendelhaerte R.T. in sek.** | | | | | | |
| 2h R.T. | 30 | 24 | 25 | 18 | 27 | 21 |
| 1d R.T. | 175 | 175 | 115 | 78 | 146 | 125 |
| 7d R.R. | 184 | 184 | 110 | 73 | 128 | 113 |
| **Kratzfestigkeit Amtec Kistler** | | | | | | |
| Restglanz nach 10 Zyklen | 64,5 | 72,0 | 61,8 | 62,8 | 60,2 | 67,4 |
| Restglanz nach Reflow (2h 60°C) | 77,5 | 81,1 | 72,5 | 77,0 | 69,2 | 75,7 |
| rel. Restglanz nach Belastung [%] | 74,5 | 82,9 | 71,4 | 72,2 | 72,6 | 79,2 |
| rel. Restglanz nach Reflow (2h 60°C) [%] | 89,5 | 93,3 | 83,7 | 88,5 | 83,5 | 89,0 |
| **Chemikalienbeständigkeiten** | | | | | | |
| **Note nach 2h \|1d\| 7d** | | | | | | |
| Wasser (1h einwirken) | 2/2/2 | 2/2/2 | 2/2/2 | 2/2/2 | 2/2/2 | 2/2/2 |
| Xylol | 4/2/1 | 4/2/1 | 4/1/1 | 4/1,5/ | 4/1/0 | 3/2/0 |
| | | | | 0,5 | | |
| MPA | 4/2/1 | 4/2/ | 4/1/1 | 4/1,5/ | 3,5/ | 3/2/1 |
| | | 0,5 | | 0,5 | 1,5/0 | |
| Superbenzin | 4/2/ | 4/2/1 | 3/1,5/ | 3/1,5/ | 3/2/ | 2,5/2/ |
| | 0,5 | | 1 | 0,5 | 0,5 | 0 |
| Visuelle Beurteilung nach Lackieren | i.O. | i.O. | i.O. | i.O. | lei. Struktur | lei. Struktur |
| Visuelle Beurteilung nach Trocknung | i.O. | i.O. | i.O. | i.O. | lei. Struktur | lei. Struktur |

| | | | | | | |
|---|---|---|---|---|---|---|
| **Note Chemikafienbestäncligkeit: 0-gut, 5-schlecht** | | | | | | |

### Vergleichsbeispiele 13.1, 13.3, 13.5; erfindungsgemäße Beispiele 13.2, 13.4, 13.6

Man erhält in allen Fällen klar-transparente haze-freie oder-arme Filme mit hervorragender Filmoptik und hohen Glanzgraden. Die Klarlacke enthaltend nano-modifizierte hydrophile Polyisocyanate lassen sich ohne Schwierigkeiten verarbeiten, die Nanopartikel haben keinerlei negativen Effekt auf Filmoptik und Glanz.

Die Trocken- sowie die Nassverkratzungsergebnisse der auf diese Weise nanomodifizierten Klarlacke (gemessen als relativer Glanzerhalt nach Belastung, s.o.) liegen um ca. 5-15 % oberhalb der jeweiligen unmodifizierten Variante. Ebenfalls verbessert sind die Beurteilungen zur Chemikalienbeständigkeit.

### Beispiel 14 Lackformulierungen Einschichtdecklack weiss

| | 1 | 2 | 3 | 4 | 5 | 6 | 7 | 8 | 9 | 10 |
|---|---|---|---|---|---|---|---|---|---|---|
| Polyol Bayhydrol-Type | XP 2470 | XP 2470 | XP 2470 | XP 2470 | XP 2470 | XP 2470 | XP 2470 | XP 2470 | XP 2470 | XP 2470 |
| FK% | 45 | 45 | 45 | 45 | 45 | 45 | 45 | 45 | 45 | 45 |
| OH% | 3,9 | 3,9 | 3,9 | 3,9 | 3,9 | 3,9 | 3,9 | 3,9 | 3,9 | 3,9 |
| Polyisocyanat | A)-1 | Bsp. 2 | A)-2 | Bsp. 4 | A)-3 | Bsp. 5 | A)-4 | Bsp. 6 | A)-5 | Bsp. 7 |
| EK% | 100 | 100 | 100 | 100 | 100 | 100 | 100 | 100 | 100 | 100 |
| NCO% | 21,2 | 15,36 | 17,4 | 13,25 | 18,2 | 23 | 16,2 | 12,34 | 20,6 | 16,14 |
| Si02-Anteil im PIC % | 0,0 | 10,0 | 0,0 | 10,0 | 0,0 | 10,0 | 0,0 | 10,0 | 0,0 | 10,0 |
| NCO:OH | 1,5 | 1,5 | 1,5 | 1,5 | 1,5 | 1,5 | 1,5 | 1,5 | 1,5 | 1,5 |
| **Komponente 1** | | | | | | | | | | |
| Bayhydrol XP 2470 | 288,1 | 249,6 | 264,7 | 231,7 | 270,1 | 293,5 | 256,1 | 223,2 | 284,7 | 255,6 |
| Surfynol 104 BC Lff. (50% BA) | 6,5 | 6,5 | 6,5 | 6,5 | 6,5 | 6,5 | 6,5 | 6,5 | 6,5 | 6,5 |
| Borchigel PW 25 Lff. (25% PG/H2O) | 0,9 | 0,9 | 0,9 | 0,9 | 0,9 | 0,9 | 0,9 | 0,9 | 0,9 | 0,9 |
| Baysilone LA 200 (10% BG) | 5,5 | 5,5 | 5,5 | 5,5 | 5,5 | 5,5 | 5,5 | 5,5 | 5,5 | 5,5 |
| Borchigen SN 95 Lff. (25% H2O) | 41,9 | 41,9 | 41,9 | 41,9 | 41,9 | 41,9 | 41,9 | 41,9 | 41,9 | 41,9 |
| Tronox R-KB-4 | 174,4 | 174,4 | 174,4 | 174,4 | 174,4 | 174,4 | 174,4 | 174,4 | 174,4 | 174,4 |
| Dest. H2O DIN 6 = 20 s | 15,0 | 20,7 | 11,0 | 14,7 | 11,4 | 20,1 | 10,0 | 10,1 | 14,7 | 14,7 |
| Gesamt Komp.1 | 532,3 | 499,5 | 504,9 | 475,6 | 510,7 | 542,8 | 495,3 | 462,5 | 528,6 | 499,5 |
| **Komponente 2** | | | | | | | | | | |
| A)-1 (80%ig in Butoxyl) | 110,5 | | | | | | | | | |
| Bsp. 2 (80%ig in Butoxyl) | | 132,1 | | | | | | | | |
| A)-2 (80%ig in Butoxyl) | | | 123,7 | | | | | | | |
| Bsp. 4 (80%ig in Butoxyl) | | | | 142,2 | | | | | | |
| A)-3 (80%ig in Butoxyl) | | | | | 120,6 | | | | | |
| Bsp. 5 (80%ig in Butoxyl) | | | | | | 105,2 | | | | |
| A)-4 (80%ig in Butoxyl) | | | | | | | 128,5 | | | |
| Bsp. 6 (80%ig in Butoxyl) | | | | | | | | 147,0 | | |
| A)-5 (80%ig in Butoxyl) | | | | | | | | | 112,4 | |
| Bsp. 7 (80%ig in Butoxyl) | | | | | | | | | | 128,8 |
| Dynasilan Glymo | 4,4 | 4,4 | 4,4 | 4,4 | 4,4 | 4,4 | 4,4 | 4,4 | 4,4 | 4,4 |
| Tinuvin 292 | 2,2 | 2,2 | 2,2 | 2,2 | 2,2 | 2,2 | 2,2 | 2,2 | 2,2 | 2,2 |
| **Gesamt Komp. 1 + 2** | 649,4 | 638,2 | 635,2 | 624,4 | 637,9 | 654,6 | 630,4 | 616,1 | 647,6 | 634,9 |
| Demin. H2O Visk. auf MV | 20,0 | 22,3 | 28,2 | 28,3 | 26,3 | 20,4 | 29,3 | 30,5 | 20,3 | 21,5 |
| Spritzviskosität DIN4 in s | 25,0 | 25,0 | 24,0 | 25,0 | 23,0 | 25,0 | 24,0 | 23,0 | 22,0 | 24,0 |
| Festkörper in % | 58,7 | 59,2 | 57,0 | 58,4 | 57,4 | 57,7 | 57,2 | 58,6 | 58,7 | 59,7 |
| Nano-Anteil im Festkörper (%) | 0,0 | 2,4 | 0,0 | 2,6 | 0,0 | 1,9 | 0,0 | 2,7 | 0,0 | 2,3 |

| | | | | | | | | | | |
|---|---|---|---|---|---|---|---|---|---|---|
| **Butoxyl:** 3-Methoxy-n-butylacetat | | | | | | | | | | |

### Vergleichsbeispiele 14.1, 14.3, 14.5, 14.7, 14.9; erfindungsgemäße Beispiele 14.2, 14.4, 14.6, 14.8, 14.10

Die Polyolmischung wurde jeweils vorgelegt, Additive und Pigment zugewogen und unter Rühren gut vermischt. Die anschließende Anreibung des Pigments kann in einer Pulvermühle oder mittels eines Skandex-Apparats erfolgen, Anreibezeit 30-60 min. Anschließend wurde mit demineralisiertem Wasser auf Auslauf-Viskosität 20 sek .(DIN 6 Becher) eingestellt. Nach einem Tag Ruhezeit (zum Entlüften) wurden das Polyisocyanat / Lösemittelgemisch zugegeben, nochmals gut verrührt und mit demin. Wasser auf Spritzviskosität 25 sek. (DIN 4 Becher) eingestellt.

Der Lack wurde dann mit einer Fließbecherpistole Sata Digital RP 2 (Düse 1.4 mm) in 1,5 Kreuzgängen auf den vorbereiteten Untergrund appliziert. Nach einer Ablüftzeit von 30 min. wurde der Lack bei 60°C für 30 min. getrocknet. Die Trockenschichtdicke betrug jeweils ca. 50 µm. Die lacktechnologischen Prüfungen erfolgten nach 7 Tagen, die Korrosionsschutzprüfungen nach 10 d RT Lagerung.

### Beispiel 15 Lacktechnoiogische Prüfung Einschichtdeckiacke weiss aus Beispiel 14 - Korrosioasschutz-Eigenschaften

| | 1 | 2 | 3 | 4 | 5 | 6 | 7 | 8 | 9 | 10 |
|---|---|---|---|---|---|---|---|---|---|---|
| Polyol | XP 2470 | XP 2470 | XP 2470 | XP 2470 | XP 2470 | XP 6 2470 | XP 2470 | XP 2470 | XP 2470 | XP 2470 |
| Polyisocyanat | A)-1 | Bsp. 2 | A)-2 | Bsp. 4 | A)-3 | Bsp. 5 | A)-4 | Bsp. 6 | A)-5 | Bsp. 7 |
| SiO2 in PIC in % | 0,0 | 10,0 | 0,0 | 10,0 | 0,0 | 10,0 | 0,0 | 10,0 | 0,0 | 10,0 |
| Schichtdicke µm | 48 | 51 | 43 | 50 | 49 | 50 | 43 | 47 | 43 | 49 |
| **Kondenswassertest** | | | | | | | | | | |
| n. 7 d | 1/1 | 0/0 | 1/1 | 1/1 | 1/1 | 1/1 | 1/1 | 1/1 | 1/1 | 1/1 |
| n. 14 d | 2/1-2 | 1/1 | 1/1-3 | 1/1 | 2/1-4 | 2/1-2 | 1/1 | 1/1-4 | 1/1 | 2/1 |
| n. 21 d | 3/1-2 | 2/1-2 | 3/1-3 | 1/1-2 | 2/1-4 | 3/1-2 | 1/1 | 1/1-4 | 2/1-2 | 3/1-2 |
| n. 35 d | 3/1-2 | 3/1-3 | 3/1-4 | 2/1-4 | 3/1-5 | 3/1-3 | 2/1-5 | 2/1-5 | 5/1-3 | 5/1-3 |
| n. 42 d | 3/1-2 | 3/1-3 | 3/1-4 | 2/1-4 | 3/1-5 | 3/1-3 | 2/1-5 | 3/1-5 | | |
| n. 49 d | 3/1-2 | 3/1-3 | 3/1-5 | 2/1-4 | 3/1-5 | 3/1-3 | 2/1-5 | 3/1-5 | | |
| n. 56 d | 3/1-3 | 3/1-3 | 3/1-5 | 2/1-5 | 3/1-5 | 3/1-5 | 3/1-5 | 3/1-5 | | |
| n. 70 d | 4/1-5 | 4/1-5 | 4/1-5 | 3/1-5 | 3/1-5 | 3/1-5 | 3/1-5 | 3/1-5 | | |
| n. 84 d | | | | 3/1-5 | 4/1-5 | 3/1-5 | 3/1-5 | 3/1-5 | | |
| n. 39 d | | | | | | | | | | |
| **Salzsprühtest** | | | | | | | | | | |
| n. 3 d | 5 | 3 | 7 | 3//1/1//1 | 8 | 5 | 7 | 5 | 10//1/1// 1 | 5 |
| n. 10 d | 20 | 12 | 35 | 18//1/1// 1 | 15 | 18//1/1-2 //1 | 30 | 20//1/1-2//1 | 20//1/1// 1 | 12 |
| n. 14 d | 30 | 18 | 50//1/1// 1 | 22 | 22 | 25//1/1-5//1 | 50 | 25//1/1-2/1 | 30 | 20 |
| n. 21 d | 35//1/1-5 | 20 | 5/1-5// 1 | 5/1-5//1 | 32 | 3/1-5//1 | 4/1-5 | 5/1/-//1 | 50//1/1-5 // 1 | 25//251/1-3 |
| n. 28 d | 4/1-5 | 30 | | | 3/1-5 | 3/1-5//1 | | | 5/1-5//1 | 30//1/1-5 |
| n. 35 d | | 3/1-5 | | | 4/1-5 | 5/1-5 | | | | 3/1-5 |
| n. 42 d | | 35//4/1-5 | | | | | | | | 4/1-5 |
| **Pendelhärte** | | | | | | | | | | |
| + 2h | 71 | 59 | 39 | 25 | 46 | 47 | 36 | 27 | 91 | 61 |
| n. 1d | 132 | 121 | 93 | 64 | 103 | 78 | 85 | 72 | 148 | 124 |
| n. 7d | 158 | 152 | 124 | 96 | 135 | 100 | 119 | 106 | 169 | 156 |
| **Beständigkeiten n. Tr., 1d, 7d** dest. H2O, 1h | 4-5/3/1 | 4-5/3/1 | 4-5/3/1 | 4-5/3/1 | 4-5/2/1 | 4-5/3/1 | 4-5/3/1 | 4-5/3/1 | 4-5/2/1 | 4-5/2/1 |
| Superbenzin 10min | 5/3/2 | 5/3-4/2 | 5/4-5/2 | 5/4-5/1-2 | 5/3/2 | 5/4/2 | 5/4/2 | 5/4-5/2 | 5/2/2 | 5/2/2 |
| MPA, 10min | 5/3/1-2 | 5/3-4/1 | 5/4-5/1 | 5/4-5/1 | 5/3/1 | 5/4/2 | 5/4/1-2 | 5/4-5/2 | 5/2/1-2 | 5/2/1-2 |
| Xylol, 10min | 5/3/1-2 | 5/3-4/1 | 5/4-5/1 | 5/4-5/1 | 5/3/1 | 5/4/2 | 5/4/1-2 | 5/4-5/1-2 | 5/2/1-2 | 5/2/1-2 |
| | | | | | | | | | | |
| Glanz 20° | 81,0 | 78,9 | 82,7 | 80,3 | 81,4 | 77,9 | 78,9 | 77,7 | 79,3 | 77,5 |
| Haze | 4,1 | 4,0 | 3,4 | 3,4 | 4,0 | 3,9 | 4,0 | 4,0 | 4,9 | 5,5 |
| **Hammerverkratzung Stahlw.** | | | | | | | | | | |
| Restglanz nach 10 DH | 79,5 | 78,7 | 81,3 | 79,6 | 80,1 | 76,0 | 78,1 | 77,0 | 77,9 | 77,1 |
| rel Restglanz nach 10 DH (%) | 98,1 | 99,7 | 98,3 | 99,1 | 98,4 | 97,6 | 99,0 | 99,1 | 98,2 | 99,5 |

### Beispiel 16 Lacktechuologische Prüfung Einschichtdecklacke weiss aus Beispiel 14 - UV Bewitterung CAM 180

| | | | | | | | | | | |
|---|---|---|---|---|---|---|---|---|---|---|
| | 1 | 2 | 3 | 4 | 5 | 6 | 7 | 8 | 9 | 10 |
| Polyol | XP 2470 | XP 2470 | XP 2470 | XP 2470 | XP 2470 | XP 2470 | XP 2470 | XP 2470 | XP 2470 | XP 2470 |
| Polyisocyanat | A)-1 | Bsp. 2 | A)-2 | Bsp. 4 | A)-3 | Bsp. 5 | A)-4 | Bsp. 6 | A)-5 | Bsp. 7 |
| SiO2 in PIC in % | 0,0 | 10,0 | 0,0 | 10,0 | 0,0 | 10,0 | 0,0 | 10,0 | 0,0 | 10,0 |
| Schichtdicke µm | 48 | 51 | 43 | 50 | 49 | 50 | 43 | 47 | 43 | 49 |
| **UV Schnellbewitterung CAM 180 Glanz 60°** | | | | | | | | | | |
| Ausgangswert | 92 | 91 | 92 | 92 | 93 | 91 | 89 | 90 | 92 | 91 |
| 250h | 90 | 89 | 88 | 86 | 89 | 88 | 86 | 87 | 92 | 90 |
| 500h | 90 | 88 | 87 | 86 | 89 | 88 | 86 | 86 | 91 | 89 |
| 750h | 89 | 87 | 87 | 86 | 88 | 87 | 84 | 84 | 90 | 88 |
| 1000h | 86 | 85 | 83 | 83 | 85 | 84 | 82 | 81 | 87 | 86 |
| 1250h | 87 | 85 | 84 | 83 | 86 | 86 | 82 | 83 | 88 | 86 |
| 1500h | 86 | 84 | 83 | 83 | 85 | 85 | 82 | 81 | 85 | 87 |
| 1750h | 84 | 82 | 81 | 81 | 84 | 83 | 80 | 78 | 86 | 85 |
| delta E | | | | | | | | | | |
| 250h | 0,1 | 0,1 | 0,2 | 0,1 | 0,1 | 0,3 | 0,3 | 0,3 | 0,1 | 0,2 |
| 500h | 0,2 | 0,1 | 0,3 | 0,1 | 0,1 | 0,3 | 0,4 | 0,2 | 0,1 | 0,1 |
| 750h | 0,4 | 0,3 | 0,4 | 0,3 | 0,3 | 0,4 | 0,4 | 0,4 | 0,3 | 0,4 |
| 1000h | 0,5 | 0,4 | 0,5 | 0,5 | 0,5 | 0,6 | 0,6 | 0,5 | 0,5 | 0,5 |
| 1250h | 0,5 | 0,5 | 0,6 | 0,4 | 0,5 | 0,6 | 0,6 | 0,5 | 0,5 | 0,4 |
| 1500h | 0,8 | 0,6 | 0,7 | 0,5 | 0,6 | 0,7 | 0,7 | 0,6 | 0,7 | 0,5 |
| 1750h | 0,7 | 0,5 | 0,6 | 0,5 | 0,6 | 0,6 | 0,6 | 0,6 | 0,6 | 0,5 |

### Vergleichsbeispiele 16.1, 16.3, 16.5, 16.7, 16.9; erfindungsgemäße Beispiele 16.2, 16.4, 16.6, 16.8, 16.10

Benotung Salzsprühtests: Blasen im Gesamtbereich des DIN-Schnitt (in mm) // Blasen: Menge / Größe // Rost (0-gut 5-schlecht)

Benotung Kondenswassertests: Blasen: Menge / Größe (0-gut 5-schlecht)

Man erhält in allen Fällen haze-freie Flme mit hervorragender Filmoptik und hohen Glanzgraden. Die Decklacke enthaltend nano-modifizierte hydrophile Polyisocyanate lassen sich ohne Schwierigkeiten verarbeiten, die Nanopartikel haben keinerlei negativen Effekt auf Filmoptik und Glanz.

Deutlich sichtbar ist die Verbesserung der Korrosionsschutzeigenschaften der Lackfilme, insbesondere im Bereich Salzsprüh-Beständigkeit. Die Verwendung der erfindungsgemäßen nanomodifizierten Polyisocyanate führt hier im Vergleich zu den unmodifizierten zu wesentlich geringeren Schadensbildern bei gleicher Belastung, bzw. ermöglicht damit erheblich längere Belastungszeiten, bis ein entsprechendes Schadensbild vorliegt.

Die Ergebnisse der CAM 180 UV Schnellbewitterung (Beispiel 16.1 bis 16.10) zeigen keinerlei negative Einflüsse der erfindungsgemäßen nanomodifizierten Polyisocyanate auf die Vergilbungstendenz (delta E) oder den Glanzabfall der untersuchten Lackfilme. In einigen Fällen kann sogar ein leicht positiver Trend auf die Vergilbung des Lackfilms beobachtet werden.

### Beispiel 17 Viskositätsverhalten nanopartikelmodifizierter hydrophober bzw. erfindungsgemäßer, hydrophiler Polyisocyanate

| **Polyisocyanat** | **Ausgangspolyisocyanat** | **Viskositätsverhältnis** |
|---|---|---|
| Erfindungsgemäßes Bsp. 2 | A)-1 | 3,6 : 1 |
| Erfindungsgemäßes Bsp. 4 | A)-2 | 2,6 : 1 |
| Erfindungsgemäßes Bsp. 6 | A)-4 | 2,4 : 1 |
| Erfindungsgemäßes Bsp. 7 | A)-5 | 3 : 1 |
| Beispiel 10 (Vergleich) | A1-1 | 4,6 : 1 |
| Beispiel 11 (Vergleich) | A1-2 | 4,8 : 1 |

| | | |
|---|---|---|
| Die entsprechenden Viskositäten wurden den Beispielen entnommen | | |

Es ist bekannt, daß Nanopartikel die Viskosität in Polymeren erhöhen. Für den Einsatz in wässrigen Anwendungen ist es jedoch erforderlich, die Viskosität der eingesetzten Polyisocyanate möglichst niedrig zu halten, um die Einarbeitbarkeit zu erleichtern. Es hat sich überraschend gezeigt, daß erfindungsgemäße nanopartikelmodifizierte hydrophile Polyisocyanate (Bsp. 2, 4, 6, 7) einen geringeren relativen Viskositätsanstieg nach Modifizierung der Ausgangspolyisocyanate aufweisen im Vergleich zu analogen nanopartikelmodifizierten Polyisocyanaten aus DE 10 2006 054289 (Vergleichsbeispiele 10 und 11).

### Vergleichsbeispiel 18 (Vergleich zu Beispiel 5)

In einer Standard-Rührapparatur wurden 442,8 g Ausgangspolyisocyanat A)-3 mit 157,2 g Nissan Organosol MEK-ST gemischt und am Rotationsverdampfer bei 60 °C und 120 mbar auf einen Feststoffgehalt von ca. 90 % eingeengt.

Man erhielt ein trübes, teilvergeltes Polyisocyanat enthaltend Ausfälllungen mit folgenden Kennzahlen: Feststoffgehalt ca. 90 Gew.-%, NCO-Gehalt 14,5 %, Viskosität: nicht meßbar, Teilchengröße 623 nm, 10 % SiO2-Gehalt im Festkörper.

Vergleichsbeispiel 18 zeigt, daß allein in polyethermodifizierten Polyisocyanaten Nanopartikel nicht als stabile, nanopartikuläre Dispersionen hergestellt werden können.

## Patentansprüche

1. Verfahren zur Herstellung nanopartikelmodifizierter Polyisocyanate, bei dem
A) Hydrophile Polyisocyanate enthaltend mindestens einen ionischen und/oder nichtionischen Emulgator mit
Polyethereinheiten der Formel (II) 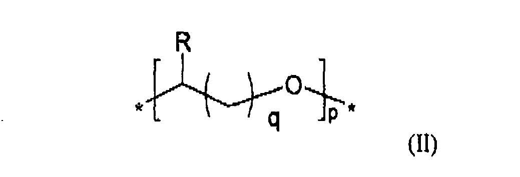 in welcher
R Wasserstoff oder cin Cl- bis C10-Alkylrest und
p eine Zahl zwischen 1 bis 1000, und
q 1 bis 3 ist
und/oder Sulfonatgruppen (als SO₃)
und/oder Phosphat- bzw. Phosphonatgruppen (als PO₄ bzw. PO₃)
mit
B) Alkoxysilanen der Formel (I) 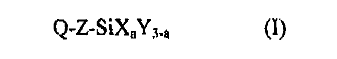 in welcher
Q eine gegenüber Isocyanaten reaktive Gruppe,
X eine hydrolysierbare Gruppe,
Y gleiche oder verschiedene Alkylgruppen
Z eine C₁-C₁₂-Alkylengruppe und
a eine ganze Zahl von 1 bis 3 ist,
umgesetzt werden, und anschließend
C) anorganische Partikel, gegebenenfalls in oberflächenmodifizierter Form, mit einer mittels dynamischer Lichtstreuung in Dispersion bestimmten mittleren Partikelgröße (Z-Mittelwert) von kleiner als 200 nm eindispergiert werden.

2. Verfahren gemäß Anspruch 1, **dadurch gekennzeichnet, dass** die hydrophilen Polyisocyanate A) Ausgangspolyisocyanate A1) sowie mindestens einem ionischen und/oder nichtionischen Emulgator D) umfassen.

3. Verfahren gemäß Anspruch 2, **dadurch gekennzeichnet, dass** in A1) monomerenarme, durch Modifizierung der entsprechender Diisocyanate erhältliche Polyisocyanate mit Uretdion-, Isocyanurat-, Allophanat-, Biuret-, Iminooxadiazindion- und/oder Oxadiazintrionstruktur eingesetzt werden.

4. Verfahren gemäß Anspruch 2 oder 3, **dadurch gekennzeichnet, dass** in A1) Polyisocyanate mit ausschließlich aliphatisch und/oder cycloaliphatisch gebundenen Isocyanatgruppen eingesetzt werden, die eine mittlere NCO-Funktionalität von 2,0 bis 5,0, einen Gehalt an Isocyanatgruppen von 8,0 bis 27,0 Gew.% und einen Gehalt an monomeren Diisocyanaten von weniger als 0,5 Gew.-% aufweisen.

5. Verfahren gemäß einem der Ansprüche 2 bis 4, **dadurch gekennzeichnet, dass** als Emulgatoren D) Umsetzungsprodukte D1) der Polyisocyanate A1) mit hydrophilen Polyetheralkoholen eingesetzt werden.

6. Verfahren gemäß einem der Ansprüche 2 bis 4, **dadurch gekennzeichnet, dass** als Emulgatoren D) Umsetzungsprodukte D2) von monomeren Diisocyanaten oder Diisocyanatgemischen mit reinen Polyethylenglycolmonomethyletheralkoholen, die im statistischen Mittel 5 bis 50, bevorzugt 5 bis 25 Ethylenoxideinheiten aufweisen, eingesetzt werden.

7. Verfahren gemäß einem der Ansprüche 2 bis 4, **dadurch gekennzeichnet, dass** als Emulgatoren D) Umsetzungsprodukte D3) eingesetzt werden, wie sie durch Abmischen und Umsetzen der Polyetherurethan-Emulgatoren D2) mit den Polyisocyanaten A1) in Gegenwart von Katalysatoren unter Allophanatbildung erhalten werden.

8. Verfahren gemäß einem der Ansprüche 2 bis 4, **dadurch gekennzeichnet, dass** als Emulgatoren D) Umsctzungsprodukte D4) der Polyisocyanate A1) mit 2-(Cyclohexylamino)-ethansulfonsäure und/oder 3-(Cyclohexylamino)-propansulfonsäure sind.

9. Verfahren gemäß einem der Ansprüche 2 bis 4, **dadurch gekennzeichnet, dass** als Emulgatoren D) mit tertiären Aminen neutralisierte Alkylphenolpolyglykoletherphosphate, Alkylphenolpolyglykolethephosphonate, Fettalkoholpolyglykoletherphosphate, Fettalkoholpolyglyko-Ictherphosphonate, Alkylphenolpolyglykolethersulfate oder Fettalkoholpolyglykolethersulfate eingesetzt werden.

10. Verfahren gemäß einem der Ansprüche 1 bis 9, **dadurch gekennzeichnet, dass** in B) solche Alkoxysilane gemäß Formel (I) eingesetzt werden, in der
X eine Alkoxy- oder Hydroxygruppe,
Y eine lineare oder verzweigte C₁-C₄-Alkylgruppe
Z eine lineare oder verzweigte C₁-C₄-Alkylengruppe und
Q eine gegenüber Isocyanaten unter Urethan-, Harnstoff- oder Thioharnstoffbildung reagierende Gruppe ist.

11. Nanopartikelmodifizicrte Polyisocyanate erhältlichen nach einem Verfahren gemäß einem der Ansprüche 1 bis 10.

12. Verwendung von nanopartikelmodifizierten Polyisocyanaten gemäß Anspruch 11 als Ausgangskomponente bei der Herstellung von Polyurethankunststoffen.

13. Polyurethansysteme enthaltend nanopartikelmodifizierte Polyisocyanate gemäß Anspruch 11.

14. Polyurethansysteme gemäß Anspruch 13, **dadurch gekennzeichnet, dass** es sich hierbei um Beschichtungsmittel oder Klebstoffe handelt.
